# EUROPÄISCHE PATENTSCHRIFT

(11) **EP 4 414 567 B1**
(45) Veröffentlichungstag und Bekanntmachung des Hinweises auf die Patenterteilung: **28.01.2026**
(21) Anmeldenummer: 24154458.4
(22) Anmeldetag: 29.01.2024
(51) Int. Cl.: F16B 5/02, F16B 5/10, F16B 43/00

(54) **VERBINDUNGSELEMENT ZWEIER ZUEINANDER BEABSTANDETER BAUTEILE MIT TOLERANZAUSGLEICHSFUNKTION SOWIE EIN INSTALLATIONSVERFAHREN DAFÜR**
CONNECTING ELEMENT FOR TWO COMPONENTS SEPARATED FROM EACH OTHER WITH TOLERANCE COMPENSATION FUNCTION AND METHOD FOR INSTALLING SAME
ÉLÉMENT DE LIAISON DE DEUX COMPOSANTS ESPACÉS L'UN PAR RAPPORT À L'AUTRE PRÉSENTANT UNE FONCTION DE COMPENSATION DE TOLÉRANCE ET PROCÉDÉ D'INSTALLATION ASSOCIÉ

(30) Priorität: 09.02.2023 DE 102023103194
(43) Veröffentlichungstag der Anmeldung: 14.08.2024
(73) Patentinhaber: Böllhoff Verbindungstechnik GmbH, 33649 Bielefeld (DE)
(72) Erfinder: HEINRICHS, Heinrich, 32602 Vlotho (DE); WEDEL, Waldemar, 33611 Bielefeld (DE)
(74) Vertreter: HWP Intellectual Property

(56) Entgegenhaltungen:
- EP-A2- 2 003 346
- EP-B1- 3 612 740
- DE-A1- 102017 124 470
- DE-A1- 102018 132 192
- US-A1- 2015 224 916

## Beschreibung

### 1. Gebiet der Erfindung

Die vorliegende Erfindung betrifft ein Verbindungselement zweier zueinander beabstandeter Bauteile mit Toleranzausgleichsfunktion. Zudem betrifft vorliegende Erfindung ein Verbindungsverfahren eines ersten und eines zweiten Bauteils in einem Abstand zueinander mithilfe des oben genannten Verbindungselements.

### 2. Hintergrund der Erfindung

Im Stand der Technik sind verschiedene Verbindungselemente bzw. Verbindungssysteme bekannt, um zwei Bauteile in einem festen Abstand zueinander miteinander zu verbinden. So offenbart beispielsweise US 2017/0051780 A1 ein erstes Bauteil, in dessen Öffnung ein hülsenförmiger Clips angeordnet wird. Eine Halterung eines zweiten Bauteils befestigt einen Stift, der in seiner Form zur Herstellung einer formschlüssigen Verbindung an den oben genannten Clips angepasst ist. Mit dem Ineinanderstecken von Clips und Stift wird eine Verbindung zwischen diesen beiden Bauteilen hergestellt. Dieses Verbindungssystem hat jedoch den Nachteil, dass lediglich eine axiale Verbindung zwischen dem Stift und dem Clips herstellbar ist, während auftretende Toleranzen in axialer und in seitlicher Richtung nicht durch eine Korrekturmöglichkeit ausgeglichen werden können.

DE 42 24 575 A1 beschreibt eine Verbindungsanordnung mit selbsttätigem Toleranzausgleich. Zu diesem Zweck wird die Verbindungsanordnung zunächst an einem ersten Bauteil befestigt.

Das zweite Bauteil, welches vom ersten Bauteil beabstandet ist, wird mithilfe eines Gewindebolzens über die Verbindungsanordnung mit dem ersten Bauteil verbunden. Während des Einschraubens des Gewindebolzens in die Verbindungsanordnung erfolgt ein selbsttätiger Toleranzausgleich, in dem ein Verstellelement den Abstand zwischen dem ersten und dem zweiten Bauteil ausgleicht. Sobald die Toleranzausgleichsanordnung den Abstand beider Bauteile überbrückt, wird der Gewindebolzen in ein befestigendes Aufnahmegewinde eingeschraubt. Diese Verbindungsanordnung ist aufwändig in ihrer Konstruktion. Denn zunächst muss der selbsttätige Toleranzausgleich durch die Abstimmung verschiedener Gewindeverbindungen innerhalb der Verbindungsanordnung realisiert werden. Zudem erlaubt nicht jede Verbindungssituation den Einsatz eines Gewindebolzens, der nur unter Nutzung einer bestimmten Verarbeitungszeit verlässlich mit der Verbindungsanordnung verschraubt werden kann.

DE 10 2007 002 699 A1 beschreibt eine Befestigungseinrichtung die auf der Nutzung zweier teleskopartig miteinander verbundener Hülsen aufbaut. Diese Hülsen sind über ein Innen- und ein Außengewinde miteinander verbunden, um einen Abstand zwischen einem ersten und einem zweiten Bauteil überbrücken zu können. Innerhalb der inneren Hülse verläuft ein verbindender Gewindebolzen, um das erste und das zweite Bauteil miteinander zu verschrauben. Entsprechend können die teleskopartig zusammenwirkenden Hülsen axiale Toleranzen ausgleichen. Da der verbindende Gewindebolzen in seinem Querschnitt kleiner ist als der Innendurchmesser der inneren Hülse, ist ein Ausgleich radialer Toleranzen durch einen relativen Versatz zwischen Gewindebolzen und umgebender Hülse gewährleistet.

US 2018/0328390 A1 nutzt einen zentralen Bolzen mit zwei einander gegenüberliegend angeordneten Gewindeenden und einem dazwischen liegenden Abstandsblock, um zwei Bauteile in einem gewissen Abstand zueinander zu befestigen. Die beiden Gewindeenden erfordern jeweils ein entsprechendes Gegengewinde, um eine Verbindung auf beiden Seiten des Gewindebolzens herstellen zu können. Dies ist mit einem entsprechend konstruktiven wie auch einem späteren Verarbeitungsaufwand verbunden. Um den Verbindungsaufwand an zumindest einem Gewindeende des zentralen Bolzens zu reduzieren, wird eine Verbindungshülse auf das eine Gewindeende des Verbindungsbolzens aufgeschraubt. Diese Verbindungshülse ist in einer mehrteiligen Verriegelungskonstruktion des zweiten Bauteils verriegelbar. Dazu wird in einem Haltekäfig des zweiten Bauteils ein Verriegelungsclip gehalten, in welchem die auf den Gewindebolzen aufgeschraubte Hülse verrastet werden kann. Zum Ausgleich axialer Toleranzen zwischen den beiden Bauteilen lässt sich der Gewindebolzen auch in der verrasteten Gewindehülse verstellen. Zu diesem Zweck ist die Gewindehülse in ihrer verrasteten Anordnung drehbar angeordnet. Aufgrund der Vielzahl an erforderlichen Teilen zum Herstellen der Verbindung zwischen den beiden zueinander beabstandeten Bauteilen wird deutlich, dass diese Verbindungsanordnung neben einem hohen Herstellungsaufwand auch einen entsprechend hohen Installationsaufwand erfordert.

DE 10 2017 124 470 A1 betrifft eine Toleranzausgleichsanordnung zum Befestigen eines ersten Bauteils an einem zweiten Bauteil mit selbsttätigem Ausgleich von Toleranzen im Abstand zwischen dem ersten Bauteil und dem zweiten Bauteil. Die Toleranzausgleichsanordnung umfasst ein Basiselement, das ein erstes Metallelement mit einem ersten Innengewinde und ein zweites Metallelement mit einem zweiten Innengewinde aufweist, die entlang einer Längsachse des Basiselements voneinander beabstandet sind, und eine Verstelleinheit, die eine Gewindehülse aus Metall mit einem Außengewinde und eine zumindest teilweise in der Gewindehülse angeordnete Mitschleppereinheit umfasst, wobei das Außengewinde mit dem ersten Innengewinde des ersten Metallelements des Basiselements eine erste Gewindepaarung einer ersten Gangrichtung bildet. Eine Befestigungsschraube ist durch eine Öffnung der Basiseinheit und der Verstelleinheit einsetzbar und über eine zweite Gewindepaarung einer der ersten entgegengesetzten zweiten Gangrichtung in das zweite Innengewinde des zweiten Metallelements des Basiselements einschraubbar. Zudem ist die Befestigungsschraube mit der Verstelleinheit über die Mitschleppereinheit durch eine lösbare Mitschleppverbindung verbindbar, um beim Eindrehen der Befestigungsschraube die Verstelleinheit mitzudrehen und dadurch in Anlage mit dem ersten Bauteil zu bewegen.

Mit Blick auf den Stand der Technik ist es daher die Aufgabe vorliegender Erfindung, ein alternatives Verbindungselement für zwei zueinander beabstandete Bauteile mit Toleranzausgleichsfunktion bereitzustellen.

### 3. Zusammenfassung der Erfindung

Die obige Aufgabe wird gelöst durch ein Verbindungselement gemäß dem unabhängigen Patentanspruch 1, eine Verbindung von zwei Bauteilen mit dem Verbindungselement gemäß Patentanspruch 11 sowie durch ein Verbindungsverfahren von zwei Bauteilen gemäß Patentanspruch 12.

Vorteilhafte Ausführungsformen und Weiterentwicklungen ergeben sich aus der nachfolgenden Beschreibung, den Zeichnungen sowie den anhängenden Patentansprüchen. Vorliegende Erfindung offenbart ein Verbindungselement zweier zueinander beabstandeter Bauteile mit Toleranzausgleichsfunktion. Das Verbindungselement weist die folgenden Merkmale auf: eine Hohlschraube mit einem Außengewinde, mit dem eine Gewindeverbindung zu einem ersten Bauteil herstellbar ist, die über mindestens ein Antriebsmittel der Hohlschraube in deren Längsrichtung verstellbar ist, ein Mutternelement, das in einem Aufnahmeraum der Hohlschraube aufgenommen ist und das eine radial innere Funktionsfläche umfasst, sodass mit einem ersten Verbindungsende eines Verbindungsbolzens eine form- und/oder kraftschlüssige Verbindung herstellbar ist, wobei der Verbindungsbolzen ein zweites Verbindungsende aufweist, mit dem eine Verbindung zu einem zweiten Bauteil herstellbar ist.

Vorliegende Erfindung beschreibt ein Verbindungselement, welches zwei Bauteile in einem festgelegten Abstand zueinander miteinander verbindet. Im Rahmen dieser Verbindung bzw. dieser Befestigung der beiden Bauteile aneinander ermöglicht das Verbindungselement den Ausgleich verschiedener Toleranzen zur Abstimmung auf eine optimale Verbindung. Bei diesen Toleranzen handelt es sich einmal um axiale Toleranzen, die durch Drehen der Hohlschraube einstellbar sind. Denn die Hohlschraube sitzt in einem vorzugsweise selbstgefurchten Gewinde des ersten Bauteils. Durch Drehen der Hohlschraube wird das Verbindungselement in seiner Axialrichtung - also entlang seiner Längsachse - in die eine oder andere Richtung versetzt. Zudem ermöglicht der innere Hohlraum der Hohlschraube sowie die darin angeordnete Kombination von Mutternelement und Verbindungsbolzen den Ausgleich von seitlichen Toleranzen senkrecht zur Längsachse des Verbindungsbolzens. Denn die Kombination aus Verbindungsbolzen und Mutternelement stellt bevorzugt während des Herstellens der Verbindung eine kraftschlüssige Verbindung mit der Hohlschraube her. Die Position der kraftschlüssigen Verbindung lässt sich innerhalb des zur Verfügung stehenden Hohlraums der Hohlschraube verändern, sodass in einer Ebene senkrecht zur Längsachse des Verbindungsbolzens ein Ausgleich von seitlichen Toleranzen durch das Verbindungselement zur Verfügung gestellt wird. Es versteht sich, dass die Bezeichnung kraftschlüssig und reibschlüssig synonym verwendet werden.

Der Verbindungsbolzen verfügt über ein erstes funktionales Verbindungsende, welches mit dem Mutternelement eine form- und/oder kraftschlüssige Verbindung eingeht. In Abhängigkeit von den zu erzielenden Verbindungskräften innerhalb des Verbindungselements sowie der zur Verfügung stehenden Taktzeit zum Herstellen der Verbindung kann die Verbindung aus Mutternelement und Verbindungsbolzen als Schnellverbinder oder Rastverbinder oder als Gewindeverbindung realisiert sein.

Entsprechend weisen das Mutternelement als Funktionsfläche ein Innengewinde und der Verbindungsbolzen ein Außengewinde oder das Mutternelement einen radial einwärts gerichteten Führungssteg oder Nocken und der Verbindungsbolzen eine krumm- oder geradlinig verlaufende Führungsnut oder eine Rampe auf. Weiter bevorzugt sind auf dem Mutternelement und dem Verbindungsbolzen ineinandergreifende Raststege und Rastnuten vorgesehen, die an aufeinanderfolgenden axialen Positionen einander zugeordnet positioniert sind.

Im Hinblick auf das zweite Verbindungsende des Verbindungsbolzens ist eine kraft- und/oder formschlüssige Verbindung mit dem zweiten Bauteil herstellbar. Das zweite Bauteil stellt zu diesem Zweck eine Öffnung bereit, in welche das zweite Verbindungsende des Verbindungsbolzens eingreift und sich dort befestigt. Gemäß einer bevorzugten Ausgestaltung vorliegender Erfindung ist das zweite Verbindungsende als Schnellverbinder ausgestaltet, wie beispielsweise ein Bajonettverschluss. Dieser greift in ein passendes Schlüsselloch im zweiten Bauteil ein. Gemäß einer weiteren bevorzugten Ausgestaltung weist das zweite Verbindungsende des Verbindungsbolzens einen Gewindeabschnitt auf, der mit einem passenden Mutternelement eine Verbindung herstellt.

Gemäß einer bevorzugten Ausführungsform vorliegender Erfindung hat eine erste Öffnung der Hohlschraube einen Öffnungsdurchmesser, der größer ist als ein Bolzendurchmesser des in die Hohlschraube ragenden Verbindungsbolzens, sodass der Verbindungsbolzen innerhalb der ersten Öffnung der Hohlschraube zum Ausgleich von Toleranzen seitlich zu seiner Längsachse versetzbar ist.

Wie oben bereits angesprochen worden ist, ermöglicht die Konstruktion der hohlzylinderartig oder hülsenförmig aufgebauten Hohlschraube einen seitlichen Versatz des Verbindungsbolzens in Bezug auf dessen Längsachse innerhalb der Hohlschraube. Auf diese Weise werden seitliche oder radiale Toleranzen im Hinblick auf die Längsachse des Verbindungsbolzens sowie die Längsachse der Hohlschraube ausgleichbar. Da vorzugsweise der Verbindungsbolzen in Kombination mit dem Mutternelement an einer bestimmten Radialposition innerhalb der Hohlschraube befestigt wird, werden auf diese Weise die für die Verbindung erforderlichen Toleranzen in der Ausrichtung von Hohlschraube und Verbindungsbolzen ausgleichbar, um eine optimale Verbindungsqualität zu erzielen.

Gemäß einer weiteren bevorzugten Ausgestaltung vorliegender Erfindung weist die Hohlschraube an der ersten Öffnung einen in die erste Öffnung ragenden Radialkragen auf, an dem das Mutternelement und der Verbindungsbolzen durch eine gemeinsame Verbindung befestigbar sind, um eine Radialposition des Verbindungsbolzens innerhalb der ersten Öffnung zu fixieren.

Gemäß einer bevorzugten Ausgestaltung vorliegender Erfindung weist das erste Bauteil eine Aufnahmeöffnung zum Einschrauben der Hohlschraube auf. Das zweite Bauteil ist ebenfalls mit einer Aufnahmeöffnung oder einer anderen passenden Konstruktion zur Herstellung einer Verbindung mit dem zweiten Ende des Verbindungsbolzens ausgestattet. Um diese beiden Öffnungen bzw. das erste und das zweite Bauteil effektiv zu verbinden, werden Ausrichtungstoleranzen zwischen dem ersten und dem zweiten Bauteil nicht durch Bewegung der Bauteile sondern durch Bewegung bzw. Versatz des Verbindungsbolzens innerhalb der Hohlschraube ausgeglichen.

Gemäß einer bevorzugten Ausgestaltung vorliegender Erfindung wird der Verbindungsbolzen nach Einnahme seiner geeigneten Radialposition innerhalb der Hohlschraube fest mit dem Mutternelement verbunden. Dies erzielt ein bevorzugtes Klemmen bzw. allgemein eine kraftschlüssige Verbindung von Mutternelement und Verbindungsbolzen mit einem radial einwärts in die Hohlschraube ragenden Radialkragen der Hohlschraube. Auf diese Weise ist die Verbindung aus Mutternelement und Funktionsbolzen fest innerhalb der Hohlschraube angeordnet. Die Konstruktion des bevorzugten Radialkragens eröffnet die Möglichkeit, dass der Verbindungsbolzen nicht zwingend koaxial zu einer Längsachse der Hohlschraube angeordnet sein muss. Vielmehr ergibt sich bevorzugt aus der Nutzung des Radialkragens und einer kraftschlüssigen Verbindung zwischen Verbindungsbolzen und Mutternelement an diesem Radialkragen eine parallele Ausrichtung des Verbindungsbolzens zu der Längsachse der Hohlschraube, sodass diese bevorzugt nebeneinander in einer gemeinsamen gedachten Ebene liegen.

Vorzugsweise hat der Verbindungsbolzen zwischen dem ersten und dem zweiten Verbindungsende einen radial auswärts ragenden Verbindungsflansch, der eine kraftschlüssige Verbindung mit der Hohlschraube unterstützt.

Gemäß einer bevorzugten Ausgestaltung vorliegender Erfindung ist an einem Verbindungsbolzen ein radial auswärts ragender Verbindungsflansch angeordnet. Eine bevorzugte feste Verbindung zwischen Verbindungsbolzen und Mutternelement führt dazu, dass der Radialkragen der Hohlschraube zwischen dem Verbindungsflansch und dem Mutternelement kraftschlüssig gehalten wird. Dies gewährleistet eine Fixierung der gewählten Radialposition des Verbindungsbolzens innerhalb der Hohlschraube.

Der Verbindungsflansch weist erfindungsgemäß bevorzugt der Hohlschraube zugewandte Stege oder Rippen auf, die eine Verbindung zwischen Hohlschraube und Verbindungsbolzen formschlüssig unterstützen.

Gemäß einer weiteren bevorzugten Ausgestaltung vorliegender Erfindung sind an dem Verbindungsflansch an einer der Hohlschraube zugewandten Seite radial verlaufende Stege vorgesehen. Diese Stege stehen aus der Ebene des Verbindungsflansches hervor. Dies führt dazu, dass im Rahmen einer bevorzugten kraftschlüssigen Verbindung mit dem Mutternelement die aus dem Verbindungsflansch hervorstehenden Stege in vorzugsweise den Radialkragen der Hohlschraube oder in einen weiteren Teil der Hohlschraube an ihrem axialen Ende eingedrückt werden. Eine sich daraus bevorzugt ergebene formschlüssige Verbindung bildet gemäß unterschiedlicher bevorzugter Ausgestaltungen eine Labyrinthdichtung oder eine Drehhemmung des Verbindungsbolzens relativ zur Hohlschraube. Diese beiden funktionellen alternativen Ausgestaltung des Verbindungsflansches unterstützen eine verbesserte Qualität der Verbindung zwischen dem ersten und dem zweiten Bauteil über das erfindungsgemäß bevorzugte Verbindungselement.

In einer weiter bevorzugten Ausgestaltung vorliegender Erfindung ist an dem Verbindungsflansch ein hutartiges Dichtungselement vorgesehen, welches in Richtung des zweiten Verbindungsendes vorsteht, um eine Verbindung zu einem zweiten Bauteil abzudichten.

Gemäß einer weiteren bevorzugten Ausgestaltung vorliegender Erfindung ist an dem Verbindungsflansch ein Dichtungselement vorgesehen. Dieses Dichtungselement ist in Richtung des zweiten Bauteils derart orientiert, dass bei Verbindung des zweiten Verbindungsendes des Verbindungsbolzens mit dem zweiten Bauteil ein abdichtender Kontakt zwischen dem Dichtungselement und dem zweiten Bauteil hergestellt wird. Dieser Kontakt sorgt dafür, dass vorzugsweise das Dichtungselement um eine Befestigungsöffnung am zweiten Bauteil, in welche der Verbindungsbolzen eingreift, die Verbindung zum Verbindungselement umlaufend abgedichtet wird. Dies gewährleistet vorzugsweise, dass Feuchtigkeit oder Staub oder ähnliche Verschmutzung durch die Öffnung im zweiten Bauteil nicht bis zu dem verbindenden Verbindungselement durchdringen kann. Denn das Dichtungselement schirmt die Öffnung im zweiten Bauteil derart ab, dass sich derartige Verschmutzungen am Dichtungselement sammeln.

Zur Realisierung seiner abdichtenden Funktion ist das Dichtungselement gemäß einer bevorzugten Ausgestaltung hutartig oder topfartig mit einer Öffnung in Richtung des zweiten Bauteils oder anders gesagt abgewandt von der Hohlschraube ausgestattet. Auf diese Weise öffnet sich das Dichtungselement in Richtung des zweiten Verbindungsendes des Verbindungsbolzens. Die bevorzugte hut- oder topfartige Struktur des Dichtungselements hat zur Folge, dass ähnlich einer Hutkrempe oder einer umlaufenden Topfwand eine Wand des Dichtungselements von der Hohlschraube weg, also in Richtung des zweiten Verbindungsendes des Verbindungsbolzens, orientiert ist. Da für das Dichtungselement gemäß einer bevorzugten Ausgestaltung ein flexibles Material verwendet wird, wie beispielsweise ein Elastomer, legt sich dieser Rand beim Verbinden an das zweite Bauteil an, um auf diese Weise die Dichtfunktion zu realisieren.

Der Verbindungsbolzen hat angrenzend an das erste Verbindungsende ein Antriebsmittel.

Um eine bevorzugte Verbindung zwischen dem zweiten Verbindungsende des Verbindungsbolzens und dem zweiten Bauteil herstellen zu können, ist ein Antriebsmittel zur Übertragung eines bevorzugten Drehmoments auf den Verbindungsbolzen erforderlich. Dieses Antriebsmittel ist benachbart zum ersten Verbindungsende des Verbindungsbolzens angeordnet. Dies hat den Vorteil, dass das zweite Verbindungsende des Verbindungsbolzens, welches von der Hohlschraube abgewandt ist, funktionell vollständig zum Herstellen der Verbindung mit dem zweiten Bauteil zur Verfügung steht.

Des Weiteren ermöglicht das Verbindungselement basierend auf dieser Konstruktion, dass die Verbindung zwischen dem ersten und dem zweiten Bauteil auch allein mit auf einer einseitigen Zugänglichkeit der Verbindungsstelle herstellbar ist. Somit ist das vorliegende Verbindungselement gerade auch an schwer zugänglichen Verbindungsstellen von zwei Bauteilen unter Gewährleistung des geforderten Abstands zwischen den beiden Bauteilen einsetzbar.

Gemäß einer weiteren bevorzugten Ausführungsform vorliegender Erfindung bilden die radial innere Funktionsfläche des Mutternelements und das erste Verbindungsende des Verbindungsbolzens einen Schnellverschluss, insbesondere einen Vierteldreh-Schnellverschluss.

Um eine erforderliche Taktzeit zum Herstellen der Verbindung zwischen den beiden Bauteilen möglichst gering zu halten, ist zwischen dem Mutternelement und dem ersten Verbindungsende des Verbindungsbolzens eine Schnellverschlussverbindung vorgesehen. Diese realisiert mit geringem Arbeitsaufwand eine kraftschlüssige und/oder formschlüssige Verbindung zur Hohlschraube, um auftretende Toleranzen beim Verbinden der beiden Bauteile nachfolgend mit dem Verbindungselement ausgleichen zu können.

Gemäß einer weiteren bevorzugten Ausgestaltung vorliegender Erfindung weist das erste Verbindungsende des Verbindungsbolzens ein Außengewinde und das Mutternelement ein dazu passendes Innengewinde zum Herstellen einer Gewindeverbindung auf.

Gemäß einer weiteren bevorzugten Ausgestaltung vorliegender Erfindung ist die Verbindung zwischen dem Mutternelement und dem ersten Verbindungsende des Verbindungsbolzens als eine Gewindeverbindung vorgesehen. Dies bedeutet, dass das Mutternelement ein Innengewinde aufweist und das erste Verbindungsende des Verbindungsbolzens ein dazu passendes Außengewinde. Eine derartige Gewindeverbindung realisiert in einem beispielgebenden Vergleich zu einer Schnellverschluss-Verbindung höhere Verbindungskräfte, die in Abhängigkeit von den beiden miteinander zu verbinden Bauteilen erforderlich sein könnten. Im Vergleich zu einem verbindenden Schnellverschluss zwischen dem Mutternelement und dem ersten Verbindungsende erfordert eine Gewindeverbindung mehr Zeit beim Herstellen der Verbindung als eine Rastverbindung oder eine Bajonettverbindung.

Vorzugsweise bildet das zweite Verbindungsende des Verbindungsbolzens einen Schnellverschluss mit einer Verbindungsöffnung in einem zweiten Bauteil, insbesondere einen Vierteldrehung-Schnellverschluss oder einen Bajonettverschluss.

Gemäß einer weiteren bevorzugten Ausgestaltung vorliegender Erfindung ist das zweite Verbindungsende des Verbindungsbolzens als Schnellverschluss ausgestaltet. Entsprechend wirkt diese Funktion der Ausgestaltung des zweiten Verbindungsendes des Verbindungsbolzens derart mit einer Öffnung im zweiten Bauteil zusammen, dass beispielsweise nur mit einer Vierteldrehung eine belastbare kraft- und/oder formschlüssige Verbindung mit dem zweiten Bauteil herstellbar ist. Mithilfe dieser funktionellen Ausgestaltung lässt sich die Taktzeit zum Herstellen der Verbindung zwischen den beiden Bauteilen weiter reduzieren. Natürlich ist es ebenfalls bevorzugt, diese Verbindung zugunsten höherer Verbindungskräfte derart anzupassen, dass beispielsweise eine Gewindeverbindung zwischen dem zweiten Verbindungsende des Verbindungsbolzens und dem zweiten Bauteil an der Bauteilöffnung hergestellt wird. Entsprechend weist beispielsweise das zweite Bauteil ein Innengewinde an der Bauteilöffnung auf oder eine Schweißmutter angrenzend an die Bauteilöffnung oder aber eine Blindnietmutter, die zuvor in die Bauteilöffnung des zweiten Bauteils gesetzt worden ist.

Gemäß einer anderen bevorzugten Ausführungsform vorliegender Erfindung weist die Hohlschraube ein erstes und ein zweites Antriebsmittel auf, die benachbart zu den gegenüberliegenden axialen Enden angeordnet sind, insbesondere ein äußeres Antriebsmittel und ein inneres Antriebsmittel.

Die Hohlschraube wird in eine Öffnung des ersten Bauteils eingeschraubt. Diese Vorpositionierung der Hohlschraube bzw. des Verbindungselements lässt sich beispielsweise in einem Vorbereitungsverfahren des ersten Bauteils realisieren. Entsprechend sind diese Vorbereitungsverfahren häufig nicht durch mangelnden Platzbedarf gekennzeichnet, sodass vorzugsweise die Hohlschraube über ein äußeres Antriebsmerkmal in die entsprechende Öffnung des ersten Bauteils eingeschraubt wird. Eine bekannte Ausgestaltung eines äußeren Antriebsmittels ist ein Mehrkant, wie beispielsweise eine Sechskant-Struktur.

Um im Rahmen einer hergestellten Verbindung zwischen den beiden Bauteilen einen bevorzugten axialen Toleranzausgleich zwischen dem ersten und dem zweiten Bauteil gewährleisten zu können, weist die Hohlschraube vorzugsweise ein zweites Antriebsmerkmal auf. Dieses zweite Antriebsmerkmal kommt dann zum Tragen, wenn beispielsweise das äußere erste Antriebsmerkmal, der oben genannte Mehrkant, schwer zugänglich oder durch die hergestellte Verbindung verdeckt sein sollte. Daher ist es erfindungsgemäß bevorzugte, innerhalb der Hohlschraube ein Antriebsmerkmal vorzusehen, in welches mit einem passenden Werkzeug formschlüssig eingegriffen werden kann. Gemäß einer bevorzugten Ausgestaltung vorliegender Erfindung ist das zweite Antriebsmerkmal an dem axialen Ende der Hohlschraube vorgesehen, welches von dem Radialkragen abgewandt ist. Somit unterstützt auch dieses zweite Antriebsmerkmal bevorzugt die oben bereits angesprochene einseitige Zugänglichkeit beim Herstellen einer Verbindung zwischen einem ersten und einem zweiten Bauteil.

Vorliegende Erfindung offenbart zudem eine Verbindung eines ersten und eines zweiten zueinander beabstandeten Bauteils mit Hilfe des oben beschriebenen Verbindungselements.

Mithilfe des erfindungsgemäß bevorzugten Verbindungselements wird vorzugsweise eine Fahrzeugleuchte mit einem Fahrzeugchassis oder eine Griffkonstruktion mit der Fahrzeugkarosserie oder eine Sitzkonstruktion mit einem Fahrzeugrahmen oder Ähnliches verbunden. Grundsätzlich werden zwei Bauteile miteinander verbunden, die in einem bestimmten Abstand zueinander angeordnet und befestigt sein müssen.

Zudem beschreibt vorliegende Erfindung ein Verbindungsverfahren eines ersten und eines zweiten Bauteils in einem Abstand zueinander mit dem Verbindungselement gemäß den oben beschriebenen Ausgestaltungen. Das Verbindungsverfahren weist die folgenden Schritte auf: Einschrauben der Hohlschraube des Verbindungselements in eine erste Befestigungsöffnung am ersten Bauteil, Befestigen des zweiten Verbindungsendes des Verbindungsbolzens in einer zweiten Befestigungsöffnung des zweiten Bauteils, wobei radiale Toleranzen in einer axialen Ausrichtung der Hohlschraube und des Verbindungsbolzens ausgeglichen werden, Verbinden des Mutternelements und des ersten Verbindungsendes des Verbindungsbolzens, sodass der Verbindungsbolzen an der Hohlschraube befestigt wird.

Vorliegende Erfindung offenbart zudem ein Verbindungsverfahren von zwei Bauteile mithilfe des Verbindungselements. Im Rahmen des Verbindungsverfahrens wird zunächst die Hohlschraube in eine dafür vorbereitete Öffnung des ersten Bauteils eingeschraubt. Vorzugsweise weist die Hohlschraube zu diesem Zweck ein selbstfurchendes und/oder selbstschneidendes Außengewinde auf, welches sich in der Öffnung des ersten Bauteils ein entsprechendes Mutterngewinde erzeugt. Sobald die Hohlschraube und damit das gesamte Verbindungselement im ersten Bauteil positioniert und befestigt worden ist, wird das Verbindungselement über ein weiteres Drehen der Hohlschraube innerhalb des ersten Bauteils axial positioniert. Es ist ebenfalls bevorzugt, dieses axiale Positionieren zu einem späteren Zeitpunkt, vorzugsweise nachdem die Verbindung zwischen dem ersten und dem zweiten Bauteil hergestellt worden ist, zu realisieren.

Danach wird das erste Bauteil passend gegenüber dem zweiten Bauteil und einer dort bevorzugt vorgesehenen Öffnung angeordnet, um die Verbindung zwischen dem ersten und dem zweiten Bauteil über das Verbindungselement herstellen zu können. Zu diesem Zweck wird über das oben angesprochene Antriebsmerkmal des Verbindungsbolzens zunächst der Verbindungsbolzen in dem zweiten Bauteil befestigt. Nachfolgend werden seitliche bzw. radiale Toleranzen im Hinblick auf die Längsachse des Verbindungsbolzens ausgeglichen, in dem der Verbindungsbolzen in Kombination mit dem Mutternelement passend innerhalb der Hohlschraube angeordnet wird. Sobald diese geeignete Radialposition von Verbindungsbolzen und Mutternelement gefunden worden ist, wird die Verbindung zwischen Verbindungsbolzen und Mutternelement kraft- und/oder formschlüssig hergestellt. Aufgrund dieser hergestellten Verbindung wird der Verbindungsbolzen in seiner gewünschten Radialposition am bevorzugten Radialkragen der Hohlschraube fixiert.

Gemäß einer bevorzugten Ausgestaltung des Verbindungsverfahrens ist als weiterer Schritt vorgesehen: Drehen der Hohlschraube im ersten Bauteil, um eine axiale Position des Verbindungselements zu verstellen.

Vorzugsweise erfolgt als weiterer Schritt: Lösen des Mutternelements innerhalb der Hohlschraube, Ändern einer Radialposition des Verbindungsbolzens im Vergleich zur Hohlschraube und danach Befestigen des Mutternelements am Verbindungsbolzen.

Im Rahmen des Installationsverfahrens bzw. des Verbindungsverfahrens von erstem und zweitem Bauteil ist es ebenfalls bevorzugt, gewisse Toleranzen auszugleichen. So wird über das bevorzugte zweite Antriebsmerkmal die Hohlschraube derart gedreht, dass axiale Toleranzen im Abstand zwischen dem ersten und zweiten Bauteil verändert werden können. Sollte es zudem innerhalb der Verbindung radiale Abweichungen in der Ausrichtung des Verbindungselements zur Öffnung des zweiten Bauteils geben, lassen sich diese radialen Toleranzen durch eine Neupositionierung des Verbindungsbolzens anpassen bzw. ausgleichen.

Zu diesem Zweck ist es bevorzugt, das Mutternelement mithilfe eines geeigneten Werkzeugs zu drehen, sodass sich die Verbindung von Verbindungsbolzen und Mutternelement löst. Nach dem Lösen lässt sich die für die Verbindung geeignete Position des Verbindungsbolzens neu einstellen, um nachfolgend die Verbindung zwischen Mutternelement und Verbindungsbolzen wieder herstellen zu können. Entsprechend sind beim Herstellen der Verbindung zwischen dem ersten Bauteil und aber auch im Nachhinein Korrekturmöglichkeiten auftretender Toleranzen in axialer und in radialer Richtung durch das Verbindungselement realisierbar.

### 4. Kurzzusammenfassung der Zeichnungen

Die vorliegende Erfindung wird anhand von bevorzugten Ausführungsformen dargestellt in den begleitenden Zeichnungen erläutert. Es zeigen:
- Figur 1: eine perspektivische Schnittansicht einer ersten bevorzugten Ausführungsform des erfindungsgemäßen Verbindungselements,

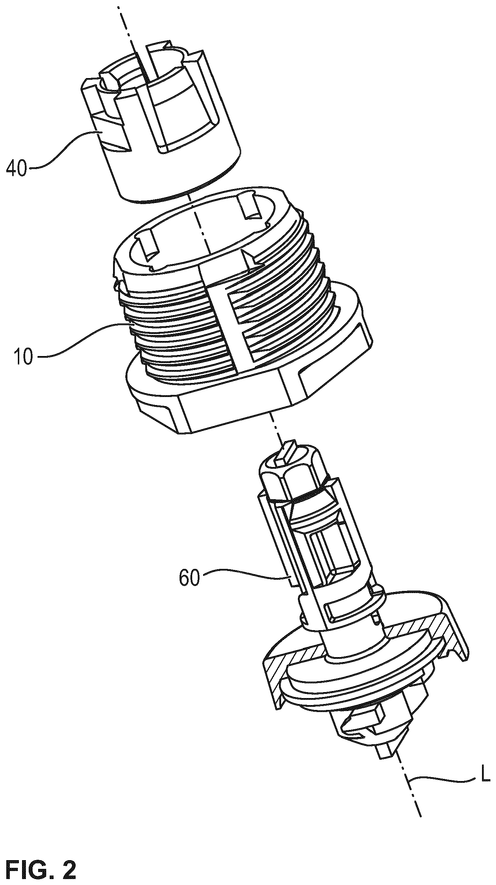

- Figur 2: eine Explosionsdarstellung der bevorzugten Ausführungsform des Verbindungselements gemäß Figur 1,
- Figur 3: eine perspektivische Ansicht der erfindungsgemäß bevorzugten Hohlschraube des Verbindungselements,
- Figur 4: eine weitere Ansicht der bevorzugten Hohlschraube gemäß Figur 3,
- Figur 5: eine perspektivische Ansicht des bevorzugten Verbindungsbolzens des Verstellelements gemäß Figur 1,
- Figur 6: eine weitere perspektivische Ansicht des Verbindungsbolzens aus Figur 5,
- Figur 7: eine teilweise perspektivische Schnittansicht des Mutternelements gemäß der bevorzugten Ausgestaltung des Verbindungselements gemäß Figur 1,
- Figur 8: eine weitere perspektivische Ansicht des Mutternelements aus Figur 7,
- Figur 9: eine weitere teilweise perspektivische Schnittansicht einer bevorzugten Ausgestaltung des Verbindungselements,
- Figur 10: das bevorzugte Verbindungselement in einer teilweisen perspektivischen Schnittansicht verbunden mit dem ersten Bauteil,

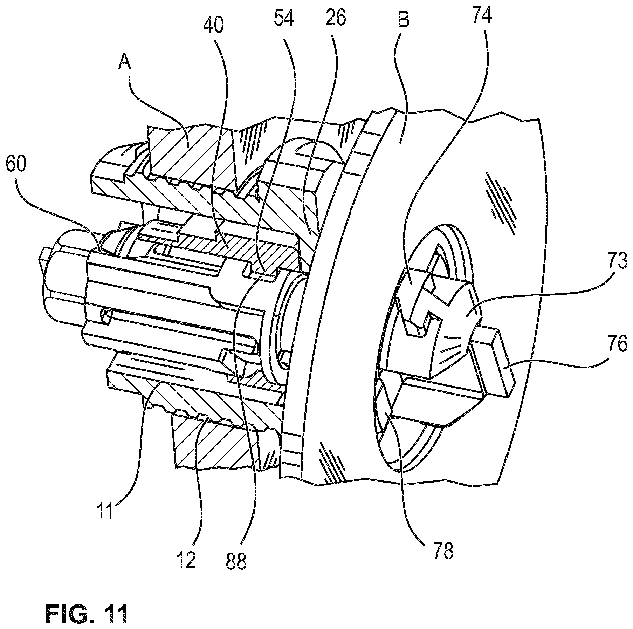

- Figur 11: eine teilweise Schnittansicht einer bevorzugten Verbindung eines ersten und eines zweiten Bauteils mithilfe des erfindungsgemäß bevorzugten Verbindungselements,
- Figur 12: eine teilweise perspektivische Schnittansicht einer weiteren bevorzugten Ausführungsform des erfindungsgemäßen Verbindungselements,
- Figur 13: ein Explosionsdarstellung des Verbindungselements gemäß Figur 12,
- Figur 14: eine perspektivische Darstellung des bevorzugten Verbindungsbolzens gemäß der bevorzugten Ausführungsform des Verbindungselements in Figur 12,
- Figur 15: eine perspektivische Ansicht des bevorzugten Mutternelements aus dem Verbindungselements gemäß Figur 12,
- Figur 16: eine teilweise Schnittansicht einer weiteren bevorzugten Ausgestaltung des Verbindungselements,
- Figur 17: eine Verbindung eines ersten eines zweiten Bauteils mithilfe des erfindungsgemäß bevorzugten Verbindungselements gemäß Figur 12,
- Figur 18: eine perspektivische teilweise Schnittansicht einer weiteren bevorzugten Ausgestaltung des erfindungsgemäßen Verbindungselements,
- Figur 19: eine weitere bevorzugte Ausgestaltung des erfindungsgemäßen Verbindungselements,
- Figur 20: eine weitere bevorzugte Ausgestaltung des erfindungsgemäßen Verbindungselements,
- Figur 21: eine perspektivische Ansicht einer weiteren bevorzugten Ausgestaltung des Verbindungselements,

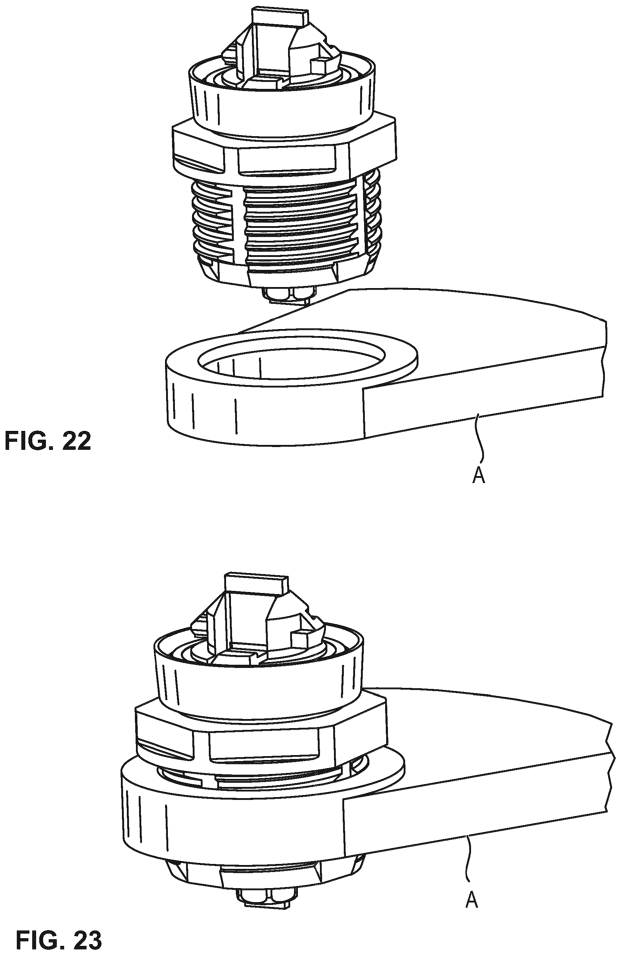

- Figur 22: eine schematische Darstellung eines Einsetzens des erfindungsgemäß bevorzugten Verbindungselements mit seiner Hohlschraube in das erste Bauteil,
- Figur 23: eine bevorzugte Darstellung des Einschraubens der Hohlschraube des erfindungsgemäß bevorzugten Verbindungselements in die Öffnung des ersten Bauteils,
- Figur 24: eine bevorzugte Ausgestaltung eines zweiten Bauteils mit einem Schlüsselloch
- Figur 25: das bevorzugte Schlüsselloch des zweiten Bauteils gemäß Figur 24, in welches das zweite axiale Verbindungsende des Verbindungsbolzens gemäß einer bevorzugten Ausführungsform des erfindungsgemäßen Verbindungselements eingesetzt wird,
- Figur 26: eine bevorzugte Ausgestaltung des zweiten axialen Verbindungsendes des Verbindungsbolzens des erfindungsgemäß bevorzugten Verbindungselements, welches im Schlüsselloch der Figur 24 verriegelt ist,
- Figur 27: eine schematische Veranschaulichung einer Einstellung einer Radialpositionen von Mutternelement und Verbindungsbolzen innerhalb eines Hohlraums der Hohlschraube,
- Figur 28: eine weitere bevorzugte Veranschaulichung der Einstellung einer Radialpositionen von Mutternelement und Verbindungsbolzen am Radialkragen der Hohlschraube des erfindungsgemäß bevorzugten Verbindungselements,

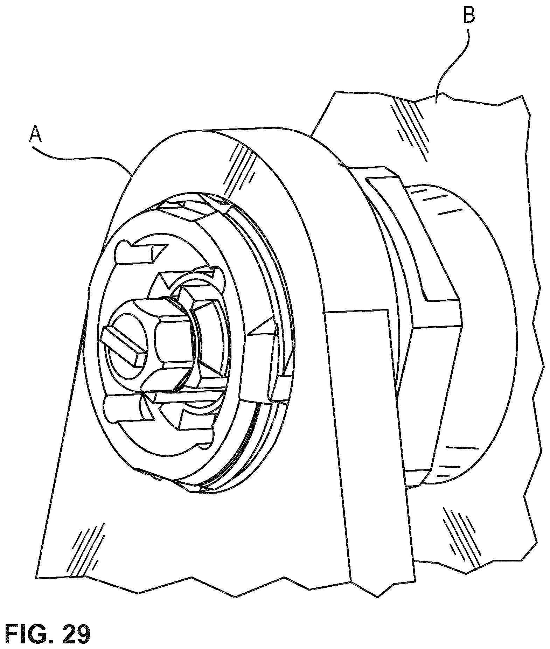

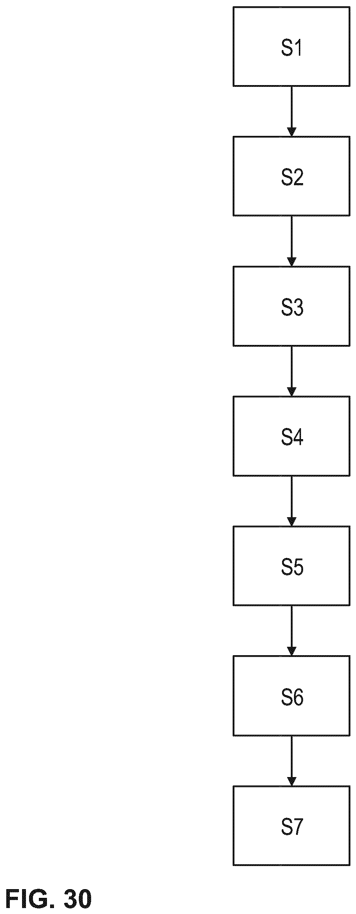

- Figur 29: eine perspektivische Ansicht einer bevorzugten Verbindung eines ersten und eines zweiten Bauteils mit dem erfindungsgemäß bevorzugten Verbindungselement,
- Figur 30: ein Flussdiagramm einer bevorzugten Ausführungsform des Installationsverfahrens zur Herstellung einer Verbindung zwischen dem ersten und zweiten Bauteil mithilfe des Verbindungselements.

### 5. Detaillierte Beschreibung der bevorzugten Ausführungsformen

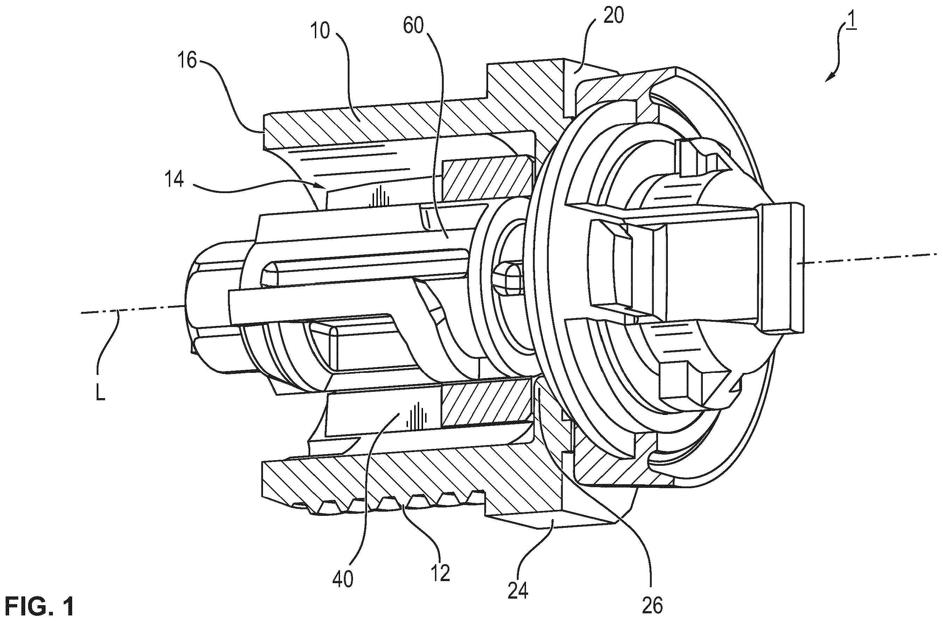

Vorliegende Erfindung beschreibt ein Verbindungselement 1, mit dem zwei Bauteile A, B miteinander verbunden werden (siehe Figuren 1, 12, 20, 21). Innerhalb der hergestellten Verbindung hält das Verbindungselement 1 einen definierten Abstand zwischen den beiden Bauteilen A, B aufrecht. Zudem ist das Verbindungselement 1 aufgrund der Konstruktion in der Lage, vorhandene Toleranzen in der Ausrichtung der zu verbindenden Bauteile A, B zueinander auszugleichen, um die Qualität, die Verlässlichkeit und die Belastbarkeit der hergestellten Verbindung zu verbessern. Das Verbindungselement 1, 101; 201; 301 ermöglicht einen axialen Toleranzausgleich in Richtung einer Längsachse L der Hohlschraube 10; 110; 210; 310 und einen seitlichen Toleranzausgleich quer zur Längsachse L der Hohlschraube 10; 110; 210; 310.

Eine erste bevorzugte Ausführungsform des Verbindungselements 1 ist in einer perspektivischen Schnittdarstellung in Figur 1 gezeigt. Es besteht aus einer hülsenartigen Hohlschraube 10 mit einem Außengewinde 12 und einem inneren Hohlraum 14.

Die Hohlschraube 10 wird in eine Öffnung O des ersten Bauteils A eingeschraubt. Um eine Befestigung der Hohlschraube 10 und damit des Verbindungselements 1 im ersten Bauteil A zu vereinfachen, ist das Gewinde 12 als ein selbstschneidendes und/oder selbstfurchendes Gewinde konfiguriert. Es ist ebenfalls bevorzugt, andere Gewindekonfigurationen zu nutzen, die eine geeignete Befestigung in der Öffnung O des ersten Bauteils A realisiert.

Vorzugsweise erzeugt das selbstschneidende und/oder selbstfurchende Gewinde einen drehungshemmenden Effekt, welcher die Hohlschraube 10 in der Öffnung O festhält. Selbst wenn die Hohlschraube 10 nach der Installation durch weiteres Drehen in ihrer axialen Position verstellt wird, gewährleistet das selbstschneidende und/oder selbstfurchende Gewinde weiterhin einen verlässlichen Halt der Hohlschraube 10 in der Öffnung O des ersten Bauteils A.

Die Hohlschraube 10 hat an einem ersten axialen Ende 16 eine erste Öffnung 18, die groß genug ist, um ein Mutternelement 40 in den Hohlraum 14 der Hohlschraube 10 einzusetzen. Das Mutternelement 40, welches detaillierter unten beschrieben ist, wird vorzugsweise in einer annähernd koaxialen Orientierung zur Längsachse L der Hohlschraube 10 in dem Hohlraum 14 aufgenommen.

An einem zweiten axialen Ende 20 der Hohlschraube 10 ist eine zweite Öffnung 22 vorgesehen. Die zweite Öffnung 22 ist im Durchmesser kleiner ausgebildet als die erste Öffnung 18. Die zweite Öffnung 22 wird durch einen radial einwärts ragenden Radialkragen 26 verkleinert, an dem sich das Mutternelement 40 mit einem Verbindungsbolzen 60 abstützt (siehe unten).

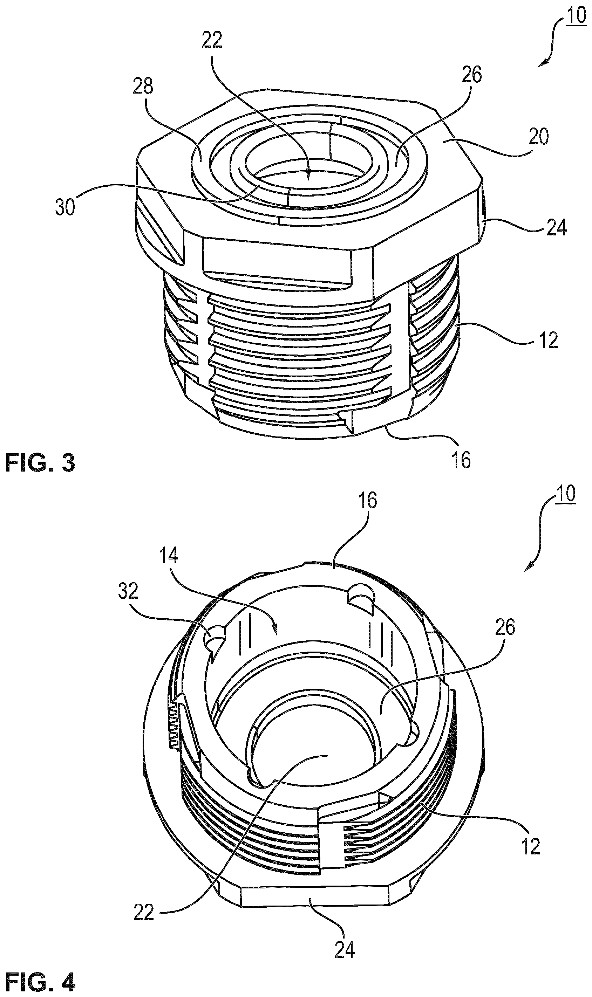

Die Hohlschraube 10 ist in einer bevorzugten Ausgestaltung in den Figuren 3 und 4 detaillierter perspektivisch dargestellt. Vorzugsweise ist angrenzend oder benachbart zur zweiten Öffnung 22 der Hohlschraube 10 ein äußeres Antriebsmittel 24, insbesondere ein Mehrkant oder Sechskant, vorgesehen. Das Antriebsmittel 24 dient der Übertragung eines Drehmoments auf die Hohlschraube 10, um diese in die Öffnung O des ersten Bauteils A einzuschrauben und damit zu befestigen.

Der Radialkragen 26 weist vorzugsweise an einer axialen Außenseite eine Anlagefläche 28 für den Verbindungsbolzen 60 auf. Vorzugsweise ist die Anlagefläche 28 ringförmig ausgestaltet. Es ist ebenfalls bevorzugt, diese Anlagefläche 28 eckig oder bestehend aus mehreren Flächensegmente in regelmäßiger Anordnung um die zweite Öffnung 22 der Hohlschraube 10 anzuordnen. Die Anlagefläche 28 bildet ebenfalls bevorzugt eine Kontaktfläche mit dem Verbindungsbolzen 60, wenn sich dieser mit Hilfe eines Verbindungsflansches 62 in einer kraftschlüssigen Verbindung mit dem Mutternelement 40 an dem Radialkragen 26 über die Anlagefläche 28 abstützt oder festklemmt.

Angrenzend an die Öffnung 22 am ersten axialen Ende 16 ist zudem bevorzugt eine umlaufende Prägerippe 30 vorgesehen. Die Prägerippe 30 ragt ebenfalls bevorzugt über die Anlagefläche 28 in axialer Richtung hinaus. Sie weist eine rund oder eckig umlaufende Form auf.

Die axial vorstehende Prägerippe 30 wird vorzugsweise in der kraftschlüssigen Verbindung zwischen Mutternelement 40 und Verbindungsbolzen 60 in einen Verbindungsflansch 62 des Verbindungsbolzens 60 eingedrückt oder eingeprägt. Dies bildet ergänzend zur kraftschlüssigen Verbindung zwischen dem Mutternelement 40 und dem Verbindungsbolzen 60 eine formschlüssige Verbindung zwischen der Hohlschraube 10 und dem Verbindungsflansch 62 des Verbindungsbolzens 60 aus. Die formschlüssige Verbindung dient der Unterstützung und Gewährleistung der Radialposition von Mutternelement 40 und Verbindungsbolzen 60 in Bezug auf die Hohlschraube 10. Zudem dichtet die formschlüssige Verbindung vorzugsweise das Verbindungselement 1 gegen von außen eindringende Medien, beispielsweise durch die Bildung einer Labyrinthdichtung, ab.

Gemäß einer weiteren bevorzugten Ausgestaltung vorliegender Erfindung weist die Hohlschraube 10 benachbart zu dem ersten axialen Ende 16 ein zweites Antriebsmittel 32 auf. Das Antriebsmittel 32 ist gemäß unterschiedlichen bevorzugten Ausgestaltungen an der axialen Stirnseite des ersten axialen Endes 16 oder an der radialen Außenseite der Hohlschraube 10 oder an der radialen Innenseite des Hohlraums 14 vorgesehen. Das Antriebsmittel 32 ermöglicht aufgrund seiner Anordnung selbst in einem installierten Zustand des Verbindungselements 1 und zwei Bauteile verbindend eine Zugänglichkeit für ein Werkzeug. Mithilfe eines bevorzugten Formschlusses zwischen dem Werkzeug und dem Antriebsmittel 32 ist ein Drehmoment auf die Hohlschraube 10 übertragbar, um eine axiale Position der Hohlschraube 10 in der Öffnung O des ersten Bauteils A zu verändern.

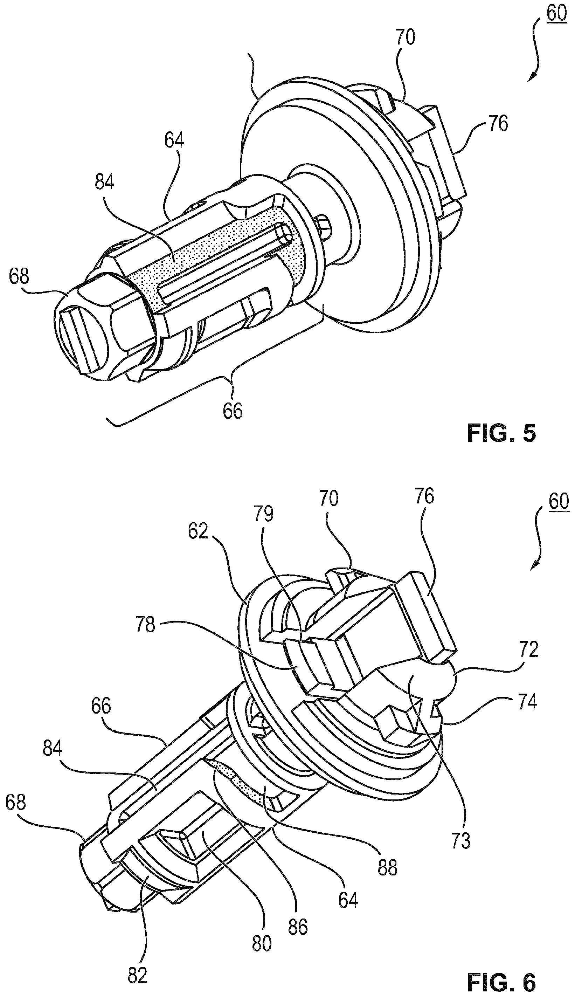

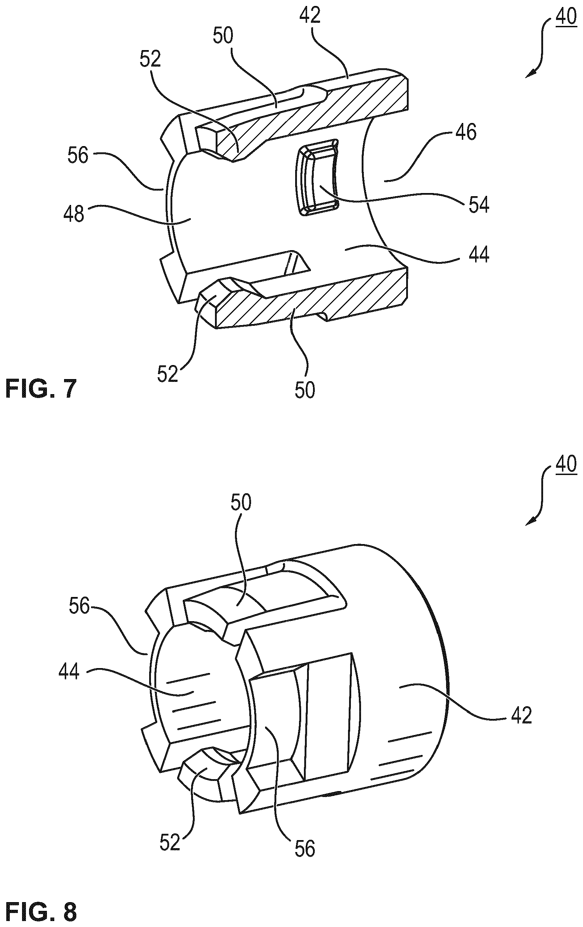

Der Verbindungsbolzen 60 ist gemäß einer ersten bevorzugten Ausführungsform vorliegender Erfindung in den Figuren 5 und 6 detaillierter gezeigt. Der Verbindungsbolzen 60 ist angepasst, um mit der bevorzugten Ausführungsform des Mutternelements 40 gemäß den Figuren 7 und 8 vorzugsweise eine lösbare Verbindung einzugehen.

Der bevorzugte Verbindungsbolzen 60 weist ein erstes axiales Verbindungsende 64 auf, um mit dem Mutternelement 40 eine formschlüssige und/oder kraftschlüssige Verbindung herzustellen.

Weiter bevorzugt sind die zusammenwirkenden Verbindungsflächen des Mutternelements 40 und des ersten Verbindungsendes 64 des Verbindungsbolzens 60 derart ausgebildet, dass die Verbindung zwischen dem Verbindungsbolzen 60 und dem Mutternelement 40 zerstörungsfrei lösbar ist.

Die Verbindungsflächen des ersten Verbindungsendes 64 des Verbindungsbolzens 60 sind entlang eines Schafts 66 des Verbindungsbolzens 60 angeordnet. Im Verbindungselement 1 ist der Schaft 66 im Hohlraum 14 der Hohlschraube 10 angeordnet und durchläuft das ebenfalls dort angeordnete Mutternelement 40.

Das erste Verbindungsende 64 wird in axialer Richtung bevorzugt durch den sich radial erstreckenden Verbindungsflansch 62 begrenzt, der außerhalb des Hohlraums 14 der Hohlschraube 10 angeordnet ist. Das erste Verbindungsende 64 läuft zudem in einem Antriebsmittel 68 aus, um darüber den Verbindungsbolzen 60 zu drehen. Vorzugsweise ist das Antriebsmittel 68 als ein Mehrkant, ein Schlitz, ein Steg, ein Kreuz oder ein Inbus ausgebildet.

Benachbart zum Verbindungsflansch 62 ist an der schaftabgewandten Seite des Verbindungsbolzens 60 ein zweites axiales Verbindungsende 70 vorgesehen. Das zweite axiale Verbindungsende 70 ist angepasst, um eine Verbindung, vorzugsweise eine lösbare Verbindung, mit dem zweiten Bauteil B herzustellen.

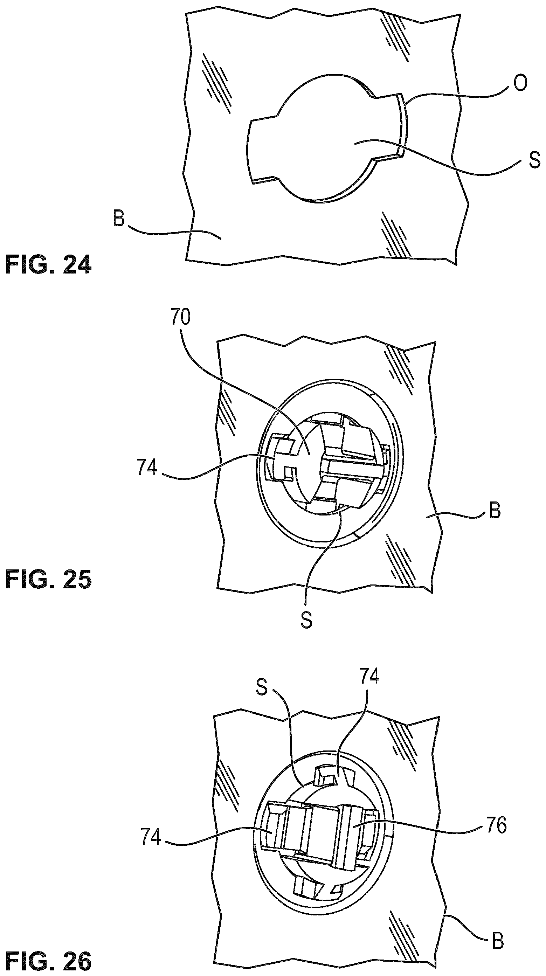

Gemäß einer bevorzugten Ausgestaltung des zweiten Verbindungsendes 70 bildet es einen Schnellverschluss mit einer Öffnung O im zweiten Bauteil B. Erfindungsgemäß bevorzugt ist eine Bajonettverbindung, sodass das zweite Verbindungsende 70 in ein Schlüsselloch S (siehe Figur 24) eingreift und sich dort über eine Vierteldrehung verriegelt. Es ist ebenfalls bevorzugt, das zweite Verbindungsende 70 als Gewindebolzen oder Gewindeschaft auszubilden, um es mithilfe einer Mutter in der Öffnung O des zweiten Bauteils B zu befestigen.

Das zweite Verbindungsende 70 weist in der in Figur 6 gezeigten bevorzugten Ausgestaltung einen zentralen Zentriervorsprung 72 mit gegenüberliegend angeordneten und radial vorstehenden Verriegelungsflügeln 74 auf. Der Zentriervorsprung 72 umfasst zwei gegenüberliegend angeordnete und zum freien Ende des Zentriervorsprungs 72 radial einwärts geneigt zulaufende Zentrierebenen 73. Diese Zentrierebenen 73 unterstützen ein Einlaufen des zweiten Verbindungsendes 70 in die Öffnung O des zweiten Bauteils B.

Ebenfalls bevorzugt ist an dem Zentriervorsprung 72 ein Orientierungssteg 76 angeordnet, der die Drehwinkeleinstellung des Verbindungsbolzens 60 im Verhältnis zum Schlüsselloch S anzeigt. Eine ähnliche Kennzeichnung findet sich bevorzugt auch am axialen Ende des ersten Verbindungsendes 64.

Beim Einsetzen und Verriegeln des zweiten Verbindungsendes 70 im Schlüsselloch S des zweiten Bauteils B werden der Zentriervorsprung 72 durch eine zentrale Öffnung und die radial vorstehenden Verriegelungsflügel 74 durch radiale Ausnehmungen des Schlüssellochs S gesteckt (siehe Figur 25). Danach wird der Verbindungsbolzen 60 vorzugsweise über das Antriebsmerkmal 68 um seine Längsachse L gedreht, bis nach einer Drehung um vorzugsweise 90° mindestens ein Verriegelungssteg 78, vorzugsweise zwei einander gegenüberliegend angeordnete Verriegelungsstege, in den radialen Ausnehmungen des Schlüssellochs S einrasten (siehe Figur 26).

Um ein bevorzugtes Lösen der verrasteten Verriegelungsstege 78 zu unterstützen, ist der Verriegelungssteg 78 einseitig mit einer Löserampe 79 versehen. Der Verriegelungssteg 78 verläuft bevorzugt entlang eines Teilkreisbogens um die Längsachse L des Verbindungsbolzens 60. Entsprechend ist die Löserampe 79 an einem (siehe Figur 6) oder an beiden Verlaufsenden des Verriegelungsstegs 78 angeordnet. Der Verbindungsbolzen 60 wird derart gedreht, dass die Löserampe 79 auf eine Radialkante einer radialen Ausnehmung des Schlüssellochs S trifft. Die Löserampe 79 drückt aufgrund der Drehung den Verriegelungssteg 78 in axialer Richtung aus der radialen Ausnehmung heraus, wodurch er gelöst wird und ein weiteres Drehen des Verbindungsbolzens 60 ermöglicht.

Vorinstalliert in der Hohlschraube 10 durchläuft der Verbindungsbolzen 60 die zweite Öffnung 22 der Hohlschraube 10 und wird durch das Mutternelement 40 im Hohlraum 14 gehalten.

Gemäß einer ersten bevorzugten Ausführungsform des Verbindungselements 1 ist der Verbindungsbolzen 60 gemäß den Figuren 5 und 6 mit dem Mutternelement 40 lösbar verbunden, welches in den Figuren 7 und 8 gemäß bevorzugter Ausgestaltungen gezeigt ist. Das Mutternelement 40 ist hülsenartige mit einer umlaufenden Wand 42, einem von der Wand 42 umschlossenen Innenraum 44, einer Eingangsöffnung 46 und einer Ausgangsöffnung 48 aufgebaut.

Gemäß einer bevorzugten Ausgestaltung vorliegender Erfindung weist die umlaufende Wand 42 mindestens zwei Einstich auf, um einen dazwischenliegenden in axialer Richtung verlaufenden Rastarm 50 zu bilden. Weiter bevorzugt weist das Mutternelement 40 zwei radial einwärts greifende Rastarme 50 auf, die einander gegenüberliegend angeordnet sind.

Die Rastarme 50 haben einen radial einwärts ragenden Rastvorsprung 52. Der Rastarm 50 mit Rastvorsprung 52 stellt vorzugsweise eine lösbare Schnapp- oder Rastverbindung mit dem Verbindungsbolzen 60 her, sobald der Verbindungsbolzen 60 in das Mutternelement 40 angeordnet im Hohlraum 14 der Hohlschraube 10 axial eingesteckt wird. Diese bevorzugt vorfixierende Verbindung zwischen dem Mutternelement 40 und dem Verbindungsbolzen 60 gewährleistet eine Positionierbewegung der verbundenen Teile in radialer Richtung innerhalb des Hohlraums 14 der Hohlschraube 10. Die äußere Grenze der radialen Bewegbarkeit wird durch den Innendurchmesser der zweiten Öffnung 22 der Hohlschraube 10 festgelegt.

Zur Herstellung der bevorzugten Rastverbindung zwischen dem Mutternelement 40 und dem Verbindungsbolzen 60 schnappt der Rastvorsprung 52 vorzugsweise in eine Vertiefung 80 zur Vorpositionierung des Verbindungsbolzens 60 an dem Mutternelement 40. Um ein Erreichen der Vertiefung 80 zu erleichtern, gleitet der Rastvorsprung 52 auf einer Positionierrampe 82 in die oder zur Vertiefung 80.

Im Rahmen der Vorpositionierung oder vor Montage von Mutternelement 40 und Verbindungsbolzen 60 im Hohlraum 14 greift vorzugsweise ein Führungsnocken 54 des Mutterelements 40 in eine bevorzugt in axialer Richtung des Verbindungsbolzens 60 verlaufende Führungsnut 84 am Schaft 66. Die Aufnahme des Führungsnocken 54 in der Führungsnut 84 bewirkt eine bevorzugte relative Axialführung zwischen Mutternelement 40 und Verbindungsbolzen 60. Zudem werden Mutternelement 40 und Verbindungsbolzen 60 gegen Verdrehen gegeneinander geschützt. Entsprechend wirkt die formschlüssige Verbindung zwischen dem Führungsnocken 54 und der Führungsnut 84 sowie zwischen dem Rastvorsprung 52 und der Vertiefung 80 einzeln oder gemeinsam als Verdrehsicherung zwischen dem Mutternelement 40 und dem Verbindungsbolzen 60.

Zunächst wird die Hohlschraube 10 in die Öffnung O im Bauteil A eingeschraubt. Dies erfolgt vorzugsweise als Vorpositionierschritt des Verbindungselements 1 oder als erster Schritt in einem Verbindungsverfahren der beiden Bauteile A und B. Zu diesem Zeitpunkt ist das Mutternelement 40 bereits mit dem Verbindungsbolzen 60 im Hohlraum 14 der Hohlschraube 10 vormontiert, also noch nicht fest verbunden. Das bedeutet, dass der Verbindungsbolzen 60 und das Mutternelement 40 über mindestens eine Rastverbindung (siehe oben) aneinander vor fixiert sind. Diese Vorfixierung gewährleistet eine radiale und teilweise axiale Bewegbarkeit des Verbindungsbolzens 60 im Hohlraum 14.

Das zweite Verbindungsende 70 wird dann bevorzugt in der Öffnung O des zweiten Bauteils B befestigt. Vorzugsweise bilden das zweite axiale Verbindungsende 70 und die Öffnung O im zweiten Bauteil B eine Schnellverriegelung oder eine Bajonettverbindung (siehe unten).

Aus der Verbindung der Hohlschraube 10 mit dem ersten Bauteil A und des Verbindungsbolzens 60 mit dem zweiten Bauteil B ergibt sich vorzugsweise die erforderliche radiale Position des Verbindungsbolzen 60 innerhalb der zweiten Öffnung 22 der Hohlschraube 10. Entsprechend wurde unterstützt durch die bevorzugt lockere Verbindung zwischen dem Mutternelement 40 und dem Verbindungsbolzen 60 ein radialer Toleranzausgleich durchgeführt. Dieser hat zu einer Anpassung der Radialposition des Verbindungsbolzens 60 im Verbindungselements 1 an die Ausrichtung der Bauteile A und B zueinander geführt.

Nach erfolgtem radialen Toleranzausgleich wird vorzugsweise die Radialposition des Verbindungsbolzens 60 in der Hohlschraube 10 fixiert. Dazu überträgt ebenfalls bevorzugt ein Werkzeug über ein Antriebsmerkmal 56 in der umlaufenden Wand 42 des Mutternelements 40, vorzugsweise eine Vertiefung an der radialen Außenseite des Mutterelements 40, ein Drehmoment auf das Mutternelement 40. Die dadurch bewirkte Drehung des Mutternelements 40 auf dem Schaft 66 des Verbindungsbolzens 60 führt dazu, dass der Führungsnocken 54 über eine Einführschräge 86 in eine Befestigungsposition 88 im Schaft 66 des Verbindungsbolzens 60 geführt wird.

Durch die bevorzugte Drehung des Mutternelement 40 wird der Führungsnocken 54 über die Einführschräge 86 in die Befestigungsposition 88 am Verbindungsbolzen 60 geführt. Die Bewegung des Führungsnocken 54 führt dazu, dass der Verbindungsbolzen 60 in axialer Richtung auf das Mutternelement 40 zu bzw. in dieses hinein versetzt wird, während sich das Mutterelement 40 am Radialkragen 26 im Hohlraum 14 abstützt. Durch die axiale Bewegung des Verbindungsbolzens 60 in Richtung Hohlschraube 10 werden das Mutternelement 40 und der Verbindungsbolzen 60 über seinen Verbindungsflansch 62 am Radialkragen 26 der Hohlschraube 10 festgeklemmt oder in einer bestimmten Radialpositionen bezogen auf die Mittellängsachse L der Hohlschraube 10 reibschlüssig fixiert.

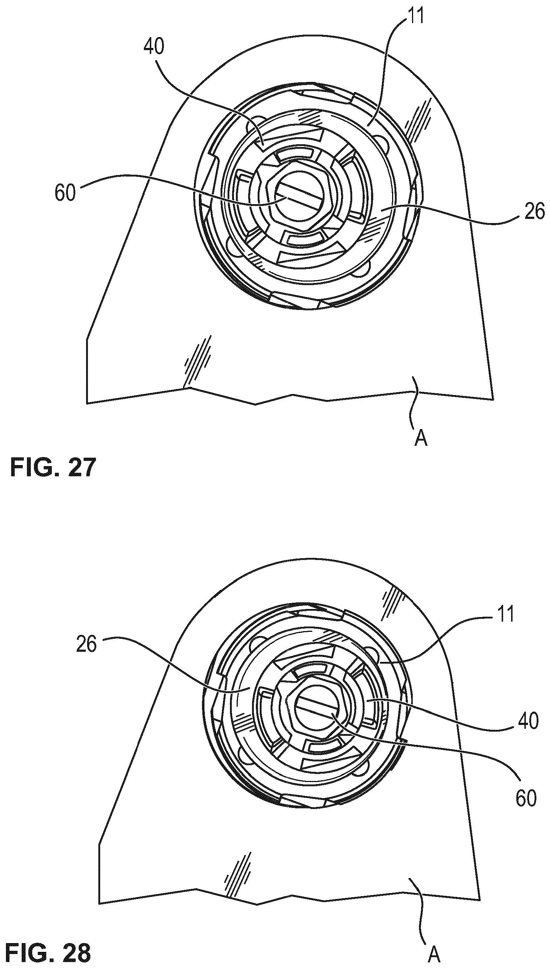

Zur Veranschaulichung der einnehmbaren unterschiedlichen Radialpositionen von Mutternelement 40 und Verbindungsbolzen 60 wird auf die Figuren 27 und 28 verwiesen. Im Vergleich zur umlaufenden Wand 11 der Hohlschraube 10 ist erkennbar, dass das Mutternelement 40 und der Verbindungsbolzen 60 an unterschiedlichen Radialpositionen am Radialkragen 26 reibschlüssig gehalten sind.

Gemäß einer bevorzugten Ausführungsform vorliegender Erfindung ist an dem Verbindungsflansch 62 des Verbindungsbolzens 60 ein Dichtungselement 90 vorgesehen. Gemäß einer bevorzugten Ausgestaltung vorliegender Erfindung weist das Dichtungselement 90 eine hut- oder topfartige Form mit einer Grundfläche 92 und einer umlaufend vorstehenden Wand 94 auf. Die Öffnung des Dichtungselements 90, die sich aus den Formmerkmalen ergibt, ist vorzugsweise in Richtung des zweiten Verbindungsende 70 des Verbindungsbolzens 60 orientiert.

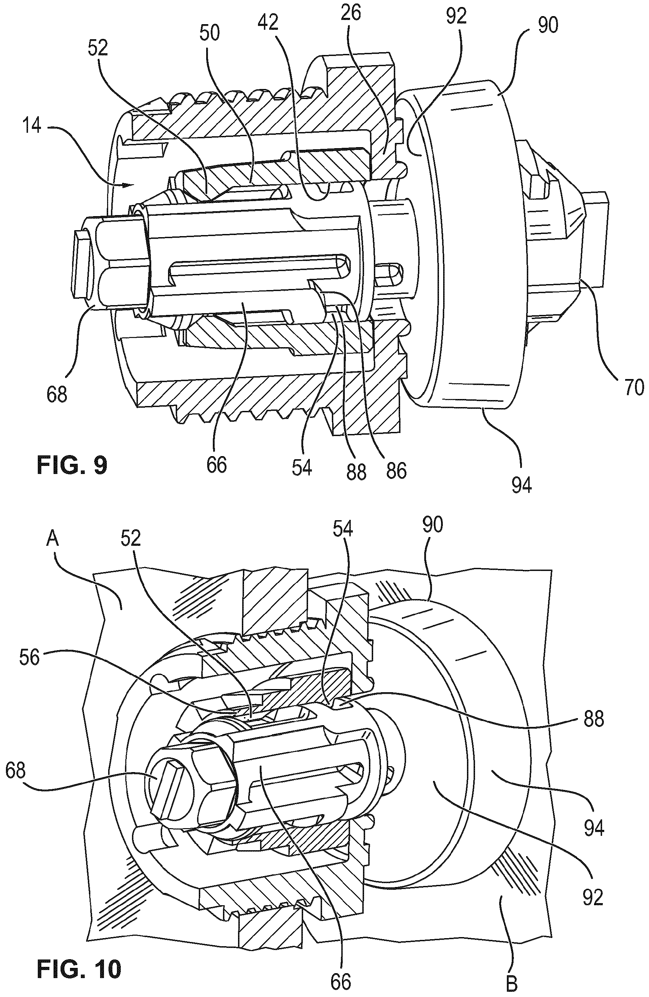

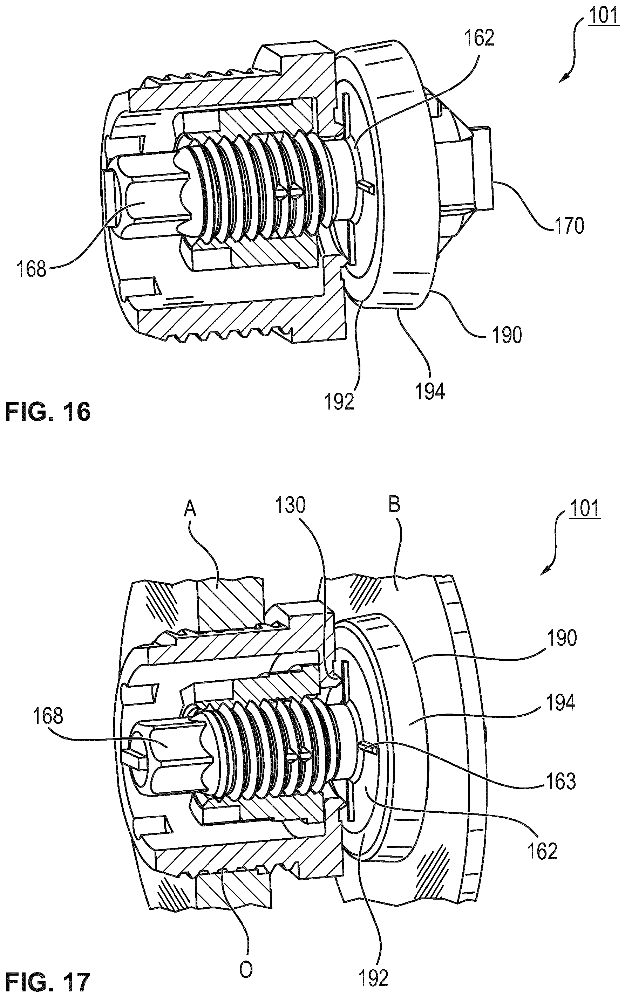

Da das Dichtungselement 90 bevorzugt aus einem elastischen Material besteht, legt es sich beim Herstellen einer Verbindung mit dem Bauteil B an diesem dichtend an, wie es in den Figuren 10 und 17 gezeigt ist.

Gemäß der bevorzugten Ausführungsform in Figur 9 und 10 ist die Grundfläche 92 als Kreisring ausgebildet, dessen innere Öffnung in ihrem Durchmesser durch den Durchmesser des Schaft 66 des Verbindungsbolzens 60 bestimmt ist. Die Größe dieser Grundfläche 92 hat den Vorteil, dass das Dichtungselement 90 zwischen dem Verbindungsflansch 62 und der benachbarten Anlagefläche 28 der Hohlschraube 10 reibschlüssig oder kraftschlüssig gehalten wird. Dies führt zu einer Abdichtung des Verbindungselements 1 nach außen.

Zur bevorzugten Steigerung des Dichteffekts weist die Hohlschraube 10 die Prägerippe 30 auf. Die ringförmig umlaufende Prägerippe 30 steht bevorzugt am zweiten axialen Ende 20 über die Anlagefläche 28 vor. Sobald das Dichtungselement 90 gegen die Prägerippe 30 gepresst wird, verformt die Prägerippe 30 das Dichtungselement 90 und bildet dadurch vorzugsweise eine Art Labyrinthdichtung.

In der bevorzugten Ausgestaltung des Dichtungselements 190 gemäß Figur 16 ist der Kreisring der Grundfläche 192 auf einen radial einwärts ragenden Haltekragen reduziert. Dadurch steht eine schaftzugewandte Seite des Verbindungsflansches 62 der kraftschlüssigen Verbindung am Radialkragen 26 zur Verfügung. Vorzugsweise weist der Verbindungsflansch 62 Radialrippen 63 auf, die in der reibschlüssigen Verbindung mit dem Mutternelement 40 in die Anlagefläche 28 und/oder die Prägerippe 30 eingeprägt werden. Auf diese Weise werden zusätzliche formschlüssige Verbindungen gebildet, die die Funktion des Verbindungselements 1 unterstützen.

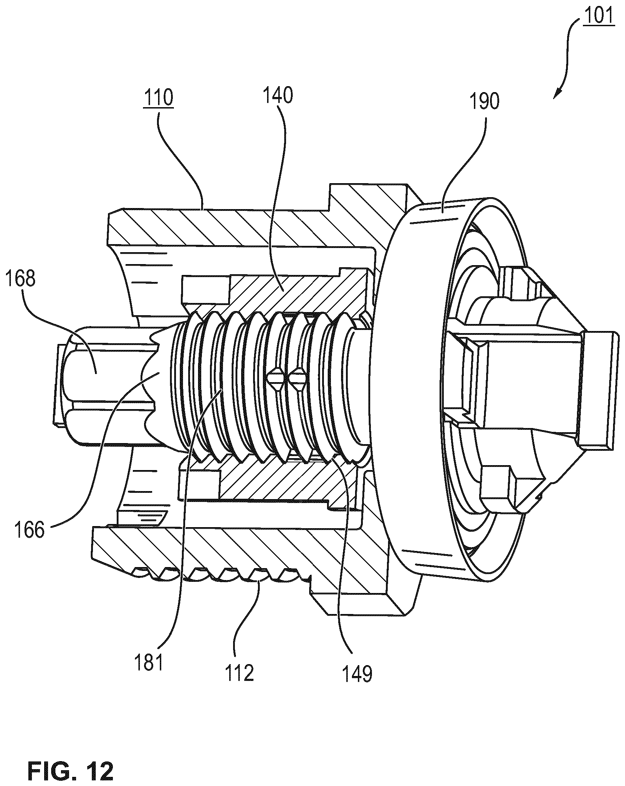

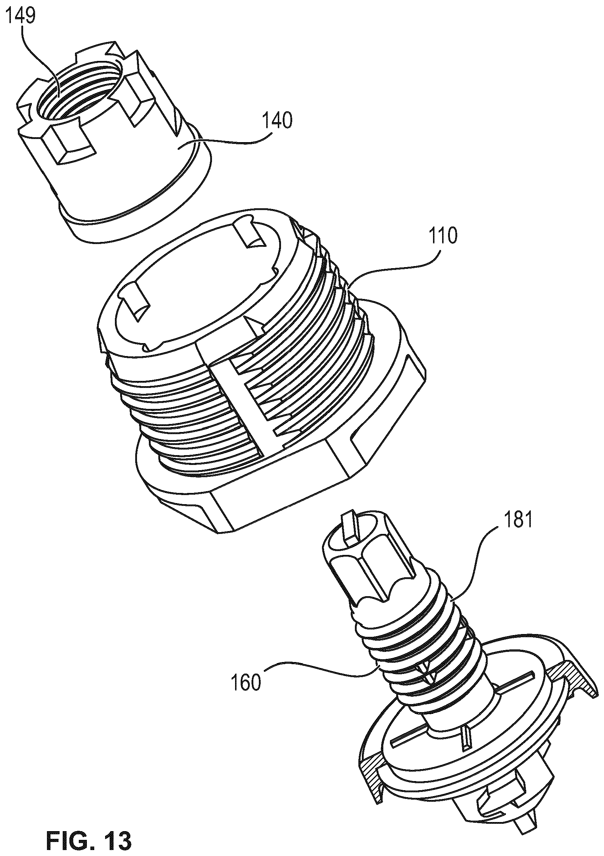

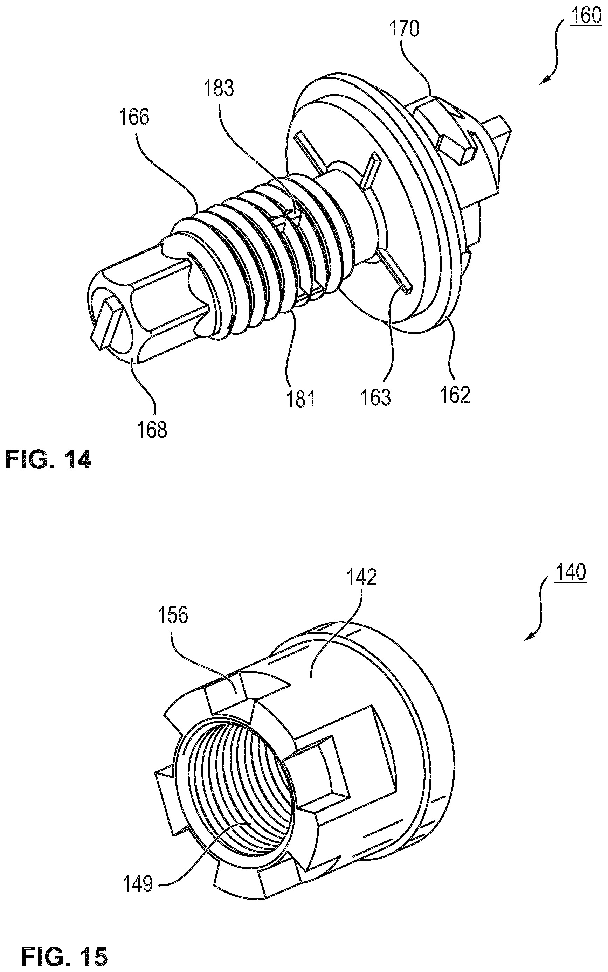

Eine weitere bevorzugte Ausführungsform des Verbindungselements 101 ist perspektivisch in den Figuren 12 und 16 gezeigt. Figur 13 zeigt die nur drei Komponenten des Verbindungselements 101 in einer perspektivischen Explosionsdarstellung, während in den Figuren 14 und 15 der Verbindungsbolzen 160 und das Mutternelement 140 einzeln dargestellt sind.

Wie auch das in Figur 1 beispielgebend gezeigte Verbindungselements 1 besteht die weitere bevorzugte Ausführungsform der Figur 12 aus nur drei Bestandteilen. Darin wird der Verbindungsbolzen 60; 160 mit Dichtungselement 90; 190 als ein Bestandteil angesehen. Die Verwendung von nur drei Bestandteilen zur Bereitstellung des Verbindungselements 1; 101 realisiert einen geringen Herstellungsaufwand im Hinblick auf Produktions-, Materialaufwand und Zusammenbau. Zudem wird dadurch vorzugsweise der Installationsaufwand reduziert, weil sich ein Verbinden auf die Hohlschraube 10; 110 und das zweite Verbindungsende 70; 170 des Verbindungsbolzens 60; 160 beschränkt. Diese Teilebegrenzung und die damit verbundenen Vorteile gelten für alle hier beschriebenen Verbindungselemente 1; 101; 201; 301.

Im Unterschied zu dem zuvor beschriebenen Verbindungselement 1 weisen der Schaft 166 des Verbindungsbolzens 160 ein Außengewinde 181 und das Mutternelement 140 ein dazu passendes Innengewinde 149 auf. Entsprechend werden das Mutternelement 140 und der Verbindungsbolzen 160 drehend miteinander verbunden.

Die Drehung wird in bekannter Weise über das Antriebsmerkmal 156 am Mutternelement 140 und/oder über das Antriebsmerkmal 168 am Verbindungsbolzen 160 aufgebracht.

Gemäß einer bevorzugten Ausführungsform vorliegender Erfindung weist das Außengewinde 181 des Verbindungsbolzens 160 mindestens eine Sperrrippe 183 zur Gewindehemmung auf. Vorzugsweise wird zur Vorpositionierung oder lockeren Anordnung der Verbindung aus Mutternelement 140 und Verbindungsbolzen 160 in der Hohlschraube 110 das Mutternelement 140 auf das Außengewinde 181 des Schafts 166 aufgeschraubt. Das Mutternelement 140 wird nur so weit aufgeschraubt, dass das Innengewinde 149 die Sperrrippe 183 noch nicht erreicht. Auf dieser Grundlage ist das Mutternelement 140 noch axial und gemeinsam mit dem Verbindungsbolzen 160 radial in der Hohlschraube 110 positionierbar.

Um den Verbindungsbolzen 160 in einer bestimmten Radialposition am Radialkragen 126 der Hohlschraube 110 zu befestigen, wird das Mutternelement 140 ganz auf das Außengewinde 181 aufgeschraubt. Auf diese Weise klemmen der Verbindungsflansch 162 und das Mutternelement 140 den Radialkragen 126 reibschlüssig bzw. kraftschlüssig zwischen sich ein, wie es in Figur 17 gezeigt ist. Gleichzeitig wird dadurch die gewählte Radialposition des Verbindungsbolzens 160 fixiert, wie es in den Figuren 27, 28 dargestellt ist. Die Sperrrippe 183 verhindert ebenfalls bevorzugt ein Lösen der Gewindeverbindung zwischen Mutterelement 140 und Verbindungsbolzen 160, wenn kein Mindestdrehmoment zur Überwindung der Gewindehemmung aufgebracht wird.

Vorzugsweise unterstreichen die Figuren 16 und 17 den bereits oben beschriebenen Installationsablauf des Verbindungselements 101. Nachdem die Verbindung aus Mutternelement 140 und Verbindungsbolzen 160 in der Hohlschraube 110 vorpositioniert worden ist, wird die Hohlschraube 110 in die Öffnung O des ersten Bauteils A eingeschraubt.

Nachfolgend wird vorzugsweise die bewegbare Verbindung aus Mutternelement 140 und Verbindungsbolzen 160 radial passend positioniert, sodass das zweite axiale Verbindungsende 170 des Verbindungsbolzens 116 auf das bevorzugte Schlüsselloch S des zweiten Bauteils B ausgerichtet ist.

Durch das bevorzugte Drehen des Verbindungsbolzens 160 über das Antriebsmerkmal 168 wird das zweite Verbindungsende 170 im Schlüsselloch S befestigt.

Danach wird ebenfalls bevorzugt mithilfe eines Werkzeugs über einen geeigneten Formschluss mit dem Antriebsmerkmal 156 am Mutternelement 140 ein Drehmoment auf das Mutternelement 140 übertragen. Das Drehen des Mutternelements 140 schraubt das Innengewinde 149 weiter auf das Außengewinde 166 des Verbindungsbolzens 160 auf. Das Aufschrauben endet mit einer wirksamen reibschlüssigen Verbindung oder Klemmung von Verbindungsflansch 162 und Mutternelement 140 am umlaufenden Radialkragen 126 der Hohlschraube 110. Dabei werden ebenfalls bevorzugt die Radialrippen 163 des Verbindungsflansches 162 in die Prägerippe 130 eingedrückt, um zusätzlichen Formschluss zu erzielen.

Das Dichtungselement 190 legt sich bereits beim Verbinden des zweiten Verbindungsendes 170 mit dem zweiten Bauteil B an dieses abdichtend an.

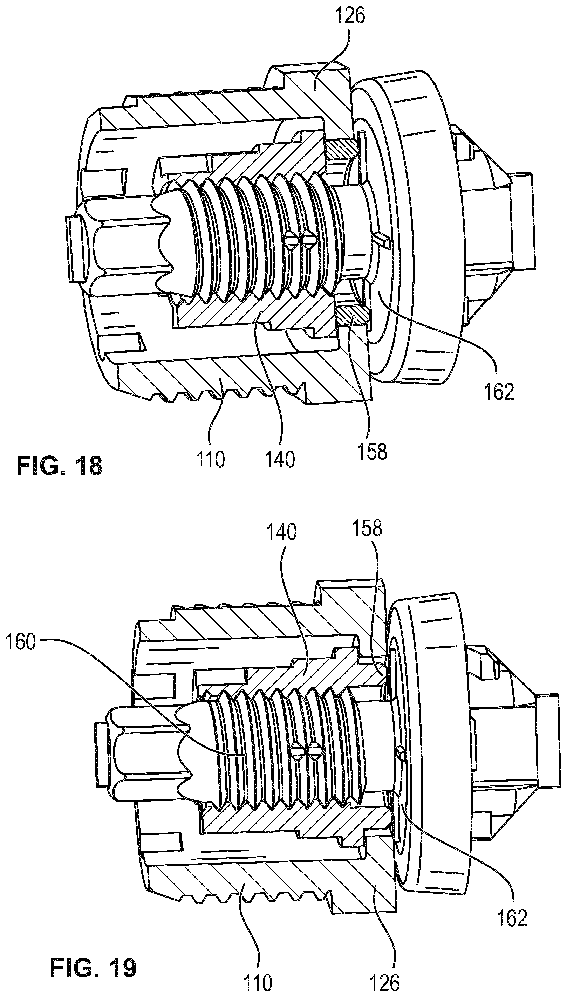

Gemäß einer bevorzugten Weiterbildung des Verbindungselements 101 ist das Mutternelement 140 mit einem axial vorstehenden Kompressionsbegrenzer 158 ausgestattet. Der Kompressionsbegrenzer 158 steht in einer ringförmigen Gestalt in Richtung Verbindungsflansch 162 vom Mutternelement 140 vor. Der Kompressionsbegrenzer 158 ist gemäß unterschiedlichen bevorzugten Ausgestaltungen als Einzelteil (siehe Figur 18) oder integriert in das Mutternelement 140 vorgesehen (siehe Figur 19).

Durch den axialen Überstand des Kompressionsbegrenzers 158 in Richtung Verbindungsflansch 162 wird der Verbindungsflansch 162 bevorzugt auf Block mit dem Kompressionsbegrenzer 158 geschraubt. Diese Blockverschraubung begrenzt die Stärke der Klemmung des Radialkragens 126 der Hohlschraube 110 zwischen dem Mutternelement 140 und dem Verbindungsflansch 162.

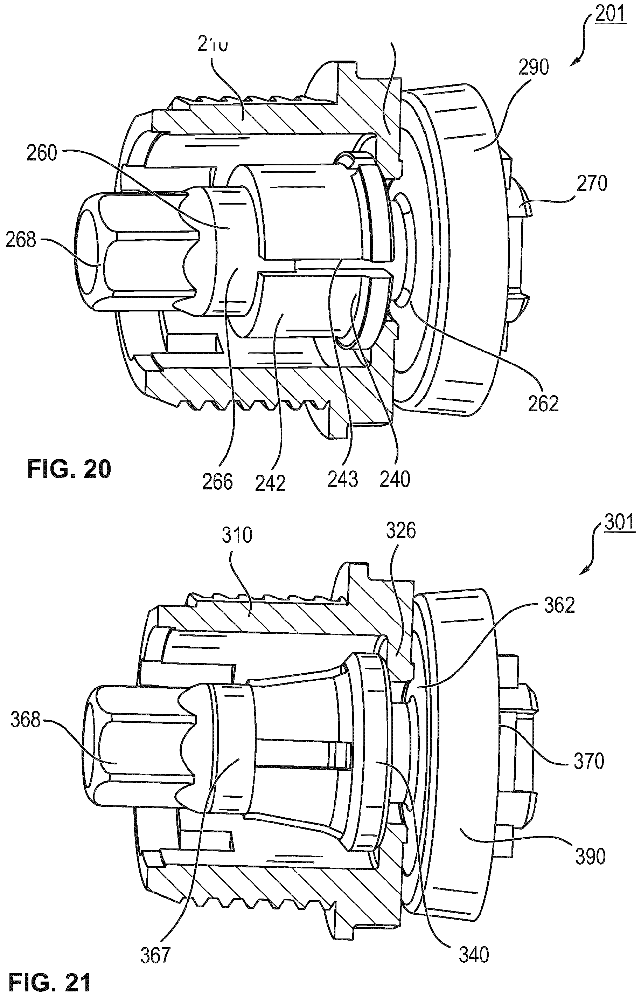

Eine weitere bevorzugte Ausführungsform des Verbindungselements 201 zeigt Figur 20. Im Unterschied zu den oben beschriebenen Ausführungsformen 1; 101 ist das Mutternelement 240 nicht lösbar auf dem Schaft 266 des Verbindungsbolzens 260 befestigt. Dazu ist das Mutternelement 240 ähnlich einem Sprengring aufgebaut. Entsprechend ist ein Innendurchmesser des Mutternelements 240 kleiner als ein Außendurchmesser des Schaft 266 des Verbindungsbolzens 260.

Das Mutternelement 240 weist einen axial durchgängigen Spalt 243 in der Wand 242 auf. Dadurch lässt sich die annähernd ringförmig gebogene Wand 242 im Durchmesser aufweiten, um das Mutternelement 240 auf den Schaft 266 zu klemmen. Die auf diese Weise erzielte reibschlüssige Verbindung zwischen dem Schaft 266 und dem Mutternelement 240 gewährleistet die ebenfalls reibschlüssige oder kraftschlüssige Verbindung zwischen dem Verbindungsflansch 262 und dem Mutternelement 240 am Radialkragen 226 der Hohlschraube 210.

Um mit dem Verbindungselement 201 die Bauteile A, B miteinander zu verbinden, wird zunächst die Hohlschraube 210 in das Bauteil A eingeschraubt (Schritt S1). Im Hohlraum 214 der Hohlschraube 210 sind das Mutternelement 240 und der Verbindungsbolzen 260 lose miteinander verbunden.

Durch Drehen des Verbindungsbolzens 260 über das Antriebsmittel 268 wird das zweite Verbindungsende 270 im zweiten Bauteil B befestigt (Schritt S2).

In der Zwischenzeit konnte die passende Radialposition des Verbindungsbolzens 260 in Ausrichtung mit den verbundenen Bauteilen A, B eingestellt werden. Um die gewählte Radialposition durch Klemmen am Radialkragen 226 der Hohlschraube 210 zu fixieren (Schritt S3), wird das Mutternelement 240 basierend auf seiner klemmringähnlichen Konfiguration mit einem passenden Werkzeug auf dem Schaft 266 maximal in Richtung Verbindungsflansch 262 verschoben. Durch die klemmende Konfiguration hält das Mutternelement 242 die reibschlüssige Verbindung mit dem Verbindungsbolzen 260 in der Radialposition am Radialkragen 226 aufrecht und fixiert dadurch ebenfalls bevorzugt die Radialposition von Mutternelement 240 und Verbindungsbolzen 260 im Hohlraum 214.

Eine weitere bevorzugte Ausführungsform des Verbindungselements 301 ist in Figur 21 gezeigt. In ähnlicher Ausgestaltung wie das Verbindungselement 201 ist das Mutternelement 340 als nicht lösbare verrastende Ringstruktur ausgebildete. Entsprechend weist das Mutternelement 340 einen umlaufenden Ring 341 mit einer sich davon in axialer Richtung erstreckenden Mehrzahl von Raststegen 345 auf. Die Raststege 345 verlaufen in Richtung des Antriebsmerkmals 368 und stützen sich an einem am Schaft 366 umlaufenden Rastvorsprung 367 ab. Die Installation des Verbindungselements 301 erfolgt analog zur oben beschriebenen Installation des Verbindungselements 201.

Das bereits oben für die unterschiedlichen bevorzugten Ausgestaltungen des Verbindungselements 1; 101; 201; 301 beschriebene Verbindungsverfahren des ersten A und des zweiten Bauteils B in einem definierten Abstand zueinander lässt sich mit folgenden Schritten zusammenfassen. In einem ersten Schritt S1 erfolgt ein Einschrauben der Hohlschraube 10; 110; 210; 310 des Verbindungselements 1; 101; 201; 301 in die erste Befestigungsöffnung O am ersten Bauteil A. Danach wird das zweite Verbindungsende 70; 170; 270; 370 des Verbindungsbolzens 60; 160; 260; 360 in einer zweiten Befestigungsöffnung S des zweiten Bauteils B befestigt, wobei radiale Toleranzen in einer axialen Ausrichtung der Hohlschraube 10; 110; 210; 310 und des Verbindungsbolzens 60; 160; 260; 360 ausgeglichen werden. In einem weiteren Schritt werden das Mutternelements 40; 140; 240; 340 und das erste Verbindungsende 64; 164; 264; 364 des Verbindungsbolzens 60; 160; 260; 360 fest miteinander verbunden, sodass der Verbindungsbolzen 60; 160; 260; 360 an der Hohlschraube10; 110; 210; 310 befestigt ist.

Gemäß einer weiteren bevorzugten Ausgestaltung des Installationsverfahrens wird die Hohlschraube10; 110; 210; 310 im ersten Bauteil A gedreht, um eine axiale Position des Verbindungselements 1; 101; 201; 301 zu verstellen.

Gemäß einer weiteren bevorzugten Ausführungsform des Verbindungsverfahrens wird das Mutternelement 40; 140; 240; 340 innerhalb der Hohlschraube 10; 110; 210; 310 gelöst, danach eine Radialposition des Verbindungsbolzens 60; 160; 260; 360 im Vergleich zur Hohlschraube 10; 110; 210; 310 geändert und dann das Mutternelement 40; 140; 240; 340 am Verbindungsbolzen 60; 160; 260; 360 wieder befestigt.

### Bezugszeichenliste

- 1, 101, 201, 301: Verbindungsflansch
- 10, 110, 210, 310: Hohlschraube
- 11: umlaufende Wand
- 12: Außengewinde
- 14: Hohlraum
- 16: erstes axiales Ende der Hohlschraube
- 18: erste Öffnung der Hohlschraube
- 20: zweites axiales Ende der Hohlschraube
- 22: zweite Öffnung der Hohlschraube
- 24: Antriebsmittel
- 26: Radialkragen
- 28: Anlagefläche
- 30: Prägerippe
- 32: zweites Antriebsmittel
- 40; 140; 240; 340: Mutternelement
- 42; 242: umlaufende Wand
- 44: Innenraum
- 46: Eingangsöffnung
- 48: Ausgangsöffnung
- 50: Rastarm
- 52: Rastvorsprung
- 54: Führungsnocken
- 56: Antriebsmerkmal
- 60; 160; 260; 360: Verbindungsbolzen
- 62: Verbindungsflansch
- 63: Radialrippen
- 64: erstes axiales Verbindungsende
- 66: Schaft
- 68: Antriebsmittel
- 70: zweites axiales Verbindungsende
- 72: Zentriervorsprung
- 73: Zentrierebene
- 74: radial vorstehende Verriegelungsflügel
- 76: Orientiersteg
- 78: Verriegelungssteg
- 79: Löserampe
- 80: Vertiefung zur Vorpositionierung
- 82: Positionierrampe
- 84: Führungsnut
- 86: Einführschräge am Schaft
- 88: Befestigungsposition des Führungsnocken 54 am Schaft
- 90: Dichtungselement
- 92: Grundfläche
- 94: umlaufende Wand des Dichtungselements
- 181: Außengewinde des Schafts 166
- 149: Innengewinde des Mutternelements 140
- 183: Sperrrippe
- 158: Kompressionsbegrenzer
- 243: Spalt
- 261: Rastkante
- 341: umlaufender Ring
- 345: Raststeg
- 367: Rastvorsprung
- A, B: Bauteile
- L: Längsachse
- O: Öffnung im zweiten Bauteil
- O: Öffnung im ersten Bauteil
- S: Schlüsselloch

## Patentansprüche

1. Ein Verbindungselement (1, 101, 201, 301) zweier zueinander beabstandeter Bauteile (A, B) mit Toleranzausgleichsfunktion, welches die folgenden Merkmale aufweist:
a. eine Hohlschraube (10, 110, 210, 310) mit einem Außengewinde, mit dem eine Gewindeverbindung zu einem ersten Bauteil (A) herstellbar ist, die über mindestens ein Antriebsmittel der Hohlschraube (10, 110, 210, 310) in deren Längsrichtung L verstellbar ist,
b. ein Mutternelement (40; 140; 240; 340), das in einem Aufnahmeraum (14) der Hohlschraube (10, 110, 210, 310) aufgenommen ist und das eine radial innere Funktionsfläche umfasst, sodass mit einem ersten Verbindungsende (64) eines Verbindungsbolzens (60; 160; 260; 360) eine form- und kraftschlüssige Verbindung herstellbar ist, wobei der Verbindungsbolzen (60; 160; 260; 360) angrenzend an das erste Verbindungsende (64) ein erstes Antriebsmittel (68, 168, 268, 368) aufweist, und wobei
c. der Verbindungsbolzen (60; 160; 260; 360) ein zweites Verbindungsende (70) aufweist, mit dem eine kraft- und/oder formschlüssige Verbindung zu einem zweiten Bauteil (B) herstellbar ist, indem das zweite Verbindungsende des Verbindungsbolzens in eine Öffnung des zweiten Bauteils eingreift und sich dort befestigt.

2. Das Verbindungselement (1, 101, 201, 301) gemäß Patentanspruch 1, in dem eine erste Öffnung der Hohlschraube (10, 110, 210, 310) einen Öffnungsdurchmesser aufweist, der größer ist als ein Bolzendurchmesser des in die Hohlschraube (10, 110, 210, 310) ragenden Verbindungsbolzens (60; 160; 260; 360), sodass der Verbindungsbolzen (60; 160; 260; 360) innerhalb der ersten Öffnung der Hohlschraube (10, 110, 210, 310) zum Ausgleich von Toleranzen seitlich zu seiner Längsachse L versetzbar ist.

3. Das Verbindungselement (1, 101, 201, 301) gemäß Patentanspruch 2, in dem die Hohlschraube (10, 110, 210, 310) an der ersten Öffnung (20) einen in die erste Öffnung (20) ragenden Radialkragen (22) aufweist, an dem das Mutternelement (40; 140; 240; 340) und der Verbindungsbolzen (60; 160; 260; 360) durch eine gemeinsame Verbindung befestigbar sind, um eine Radialposition des Verbindungsbolzens (60; 160; 260; 360) innerhalb der ersten Öffnung (20) zu fixieren.

4. Das Verbindungselement (1, 101, 201, 301) gemäß einem der vorhergehenden Patentansprüche, in dem der Verbindungsbolzen (60; 160; 260; 360) zwischen dem ersten und dem zweiten Verbindungsende einen radial auswärts ragenden Verbindungsflansch (62) aufweist, der eine kraftschlüssige Verbindung mit der Hohlschraube (10, 110, 210, 310) unterstützt.

5. Das Verbindungselement (1, 101, 201, 301) gemäß Patentanspruch 4, in dem der Verbindungsflansch (62) der Hohlschraube (10, 110, 210, 310) zugewandte Stege aufweist, die eine Verbindung zwischen Hohlschraube (10, 110, 210, 310) und Verbindungsbolzen (60; 160; 260; 360) formschlüssig unterstützen.

6. Das Verbindungselement (1, 101, 201, 301) gemäß Patentanspruch 4 oder 5, in dem der Verbindungsflansch (62) ein hutartiges Dichtungselement (90) aufweist, welches in Richtung des zweiten Verbindungsendes (70) vorsteht, um eine Verbindung zu einem zweiten Bauteil (B) abzudichten.

7. Das Verbindungselement (1, 101, 201, 301) gemäß einem der vorhergehenden Patentansprüche, in dem die radial innere Funktionsfläche des Mutternelements (40; 140; 240; 340) und das erste Verbindungsende (70) des Verbindungsbolzens (60; 160; 260; 360) einen Schnellverschluss bilden, insbesondere einen Vierteldreh-Schnellverschluss.

8. Das Verbindungselement (1, 101, 201, 301) gemäß einem der Patentansprüche 1-6, in dem das erste Verbindungsende des Verbindungsbolzens (60; 160; 260; 360) ein Außengewinde und das Mutternelement (40; 140; 240; 340) ein dazu passendes Innengewinde zum Herstellen einer Gewindeverbindung aufweisen.

9. Das Verbindungselement (1, 101, 201, 301) gemäß einem der vorhergehenden Patentansprüche, in dem das zweite Verbindungsende des Verbindungsbolzens (60; 160; 260; 360) einen Schnellverschluss mit einer Verbindungsöffnung in einem zweiten Bauteil bildet, insbesondere einen Vierteldrehung-Schnellverschluss oder einen Bajonettverschluss.

10. Das Verbindungselement (1, 101, 201, 301) gemäß einem der vorhergehenden Patentansprüche, in dem die Hohlschraube ein erstes und ein zweites Antriebsmittel aufweist, die benachbart zu den gegenüberliegenden axialen Enden angeordnet sind, insbesondere ein äußeres Antriebsmittel und ein inneres Antriebsmittel.

11. Eine Verbindung aus einem ersten und einem zweiten zueinander beabstandeten Bauteils (A, B) mit dem Verbindungselement (1, 101, 201, 301) gemäß einem der vorhergehenden Patentansprüche.

12. Ein Verbindungsverfahren eines ersten und eines zweiten Bauteils (A, B) in einem Abstand zueinander mit dem Verbindungselement (1, 101, 201, 301) gemäß einem der vorhergehenden Patentansprüche 1-10, welches die folgenden Schritte aufweist:
a. Einschrauben der Hohlschraube (10, 110, 210, 310) des Verbindungselements (1, 101, 201, 301) in eine erste Befestigungsöffnung (20) am ersten Bauteil (A),
b. Befestigen des zweiten Verbindungsendes des Verbindungsbolzens (60; 160; 260; 360) in einer zweiten Befestigungsöffnung des zweiten Bauteils, wobei radiale Toleranzen in einer axialen Ausrichtung der Hohlschraube (10, 110, 210, 310) und des Verbindungsbolzens (60; 160; 260; 360) ausgeglichen werden,
c. Verbinden des Mutternelements (40; 140; 240; 340) und des ersten Verbindungsendes des Verbindungsbolzens (60; 160; 260; 360), sodass der Verbindungsbolzen an der Hohlschraube (10, 110, 210, 310) befestigt wird.

13. Das Verbindungsverfahren gemäß Patentanspruch 12 mit dem weiteren Schritt:
d. Drehen der Hohlschraube (10, 110, 210, 310) im ersten Bauteil, um eine axiale Position des Verbindungselements zu verstellen.

14. Das Verbindungsverfahren gemäß Patentanspruch 12 oder 13, mit dem weiteren Schritt:
Lösen des Mutternelements (40; 140; 240; 340) innerhalb der Hohlschraube (10, 110, 210, 310),
Ändern einer Radialposition des Verbindungsbolzens (60; 160; 260; 360) im Vergleich zur Hohlschraube (10, 110, 210, 310) und
danach Befestigen des Mutternelements (40; 140; 240; 340) am Verbindungsbolzen (60; 160; 260; 360).

## Claims

1. A connecting element (1, 101, 201, 301) of two components (A, B) spaced apart one another with tolerance compensation function comprising the following features:
a. a hollow screw (10, 110, 210, 310) with an outer thread, with which a thread connection to a first component (A) is establishable, which is adjustable by means of at least one drive means of the hollow screw (10, 110, 210, 310) in its longitudinal direction L,
b. a nut element (40; 140; 240; 340) which is received in a receiving space (14) of the hollow screw (10, 110, 210, 310) and which comprises a radial inner functional surface so that a form-fit and force-fit connection is establishable with a first connecting end (64) of a connecting bolt (60; 160; 260; 360), wherein the connecting bolt (60; 160; 260; 360) includes a first drive means (68, 168, 268, 368) adjacent to the first connecting end (64), and wherein
c. the connecting bolt (60; 160; 260; 360) has a second connecting end (70), with which a force-fit and/or form-fit connection to a second component (B) is establishable by means of engagement of the second connecting end of the connecting bolt into an opening of the second component and fastening of the second connecting end in there.

2. The connecting element (1, 101, 201, 301) according to claim 1, in which a first opening of the hollow screw (10, 110, 210, 310) has an opening diameter which is larger than a bolt diameter of the connecting bolt (60; 160; 260; 360) which reaches into the hollow screw (10, 110, 210, 310), so that the connecting bolt (60; 160; 260; 360) is displaceable laterally with respect to its longitudinal axis L within the first opening of the hollow screw (10, 110, 210, 310) so as to compensate tolerances.

3. The connecting element (1, 101, 201, 301) according to claim 2, in which the hollow screw (10, 110, 210, 310) comprises a radial collar (22) at the first opening (20) reaching into the first opening (20), to which collar (22) the nut element (40; 140; 240; 340) and the connecting bolt (60; 160; 260; 360) are fastenable by means of a joint connection so as to fix a radial position of the connecting bolt (60; 160; 260; 360) within the first opening (20).

4. The connecting element (1, 101, 201, 301) according to one of the preceding claims, in which the connecting bolt (60; 160; 260; 360) comprises a radially outwardly projecting connecting flange (62) between the first and the second connecting end, the connecting flange (62) supporting a force-fit connection with the hollow screw (10, 110, 210, 310).

5. The connecting element (1, 101, 201, 301) according to claim 4, in which the connecting flange (62) comprises webs facing the hollow screw (10, 110, 210, 310) which support a connection between hollow screw (10, 110, 210, 310) and connecting bolt (60; 160; 260; 360) in a form-fit manner.

6. The connecting element (1, 101, 201, 301) according to claim 4 or 5, in which the connecting flange (62) comprises a cap-like sealing element (90) projecting in the direction of the second connecting end (70) so as to seal a connection to a second component (B).

7. The connecting element (1, 101, 201, 301) according to one of the preceding claims, in which the radial inner functional surface of the nut element (40; 140; 240; 340) and the first connecting end (70) of the connecting bolt (60; 160; 260; 360) form a quick lock, in particular a quarter turn quick lock.

8. The connecting element (1, 101, 201, 301) according to one of the claims 1-6, in which the first connecting end of the connecting bolt (60; 160; 260; 360) comprises an outer thread and the nut element (40; 140; 240; 340) comprises a matching inner thread for establishing a thread connection.

9. The connecting element (1, 101, 201, 301) according to one of the preceding claims, in which the second connecting end of the connecting bolt (60; 160; 260; 360) forms a quick lock with a connecting opening in a second component, in particular a quarter turn quick lock or a bayonet lock.

10. The connecting element (1, 101, 201, 301) according to one of the preceding claims, in which the hollow screw includes a first and a second drive means which are arranged adjacent to the opposite axial ends, in particular an outer drive means and an inner drive means.

11. A connection of a first and a second component (A, B) spaced apart one another with the connecting element (1, 101, 201, 301) according to one of the preceding claims.

12. A connecting method of a first and a second component (A, B) at a distance to one another with the connecting element (1, 101, 201, 301) according to one of the preceding claims 1-10, including the following steps:
a. screwing-in the hollow screw (10, 110, 210, 310) of the connecting element (1, 101, 201, 301) into a first fastening opening (20) at the first component (A),
b. fastening the second connecting end of the connecting bolt (60; 160; 260; 360) in a second fastening opening of the second component, with radial tolerances being compensated in an axial alignment of the hollow screw (10, 110, 210, 310) and the connecting bolt (60; 160; 260; 360),
c. connecting the nut element (40; 140; 240; 340) and the first connecting end of the connecting bolt (60; 160; 260; 360) so that the connecting bolt is fastened to the hollow screw (10, 110, 210, 310).

13. The connecting method according to claim 12 with the further step:
d. rotating the hollow screw (10, 110, 210, 310) in the first component so as to adjust an axial position of the connecting element.

14. The connecting method according to claim 12 or 13, with the further step:
releasing the nut element (40; 140; 240; 340) within the hollow screw (10, 110, 210, 310),
changing a radial position of the connecting bolt (60; 160; 260; 360) compared with the hollow screw (10, 110, 210, 310) and
after that, fastening the nut element (40; 140; 240; 340) at the connecting bolt (60; 160; 260; 360).

## Revendications

1. Élément de liaison (1, 101, 201, 301) de deux composants (A, B) espacés l'un de l'autre avec une fonction de compensation de tolérance, présentant les caractéristiques suivantes :
a. une vis creuse (10, 110, 210, 310) dotée d'un filetage extérieur permettant de réaliser une liaison filetée avec un premier composant (A), laquelle est réglable dans leur direction longitudinale L par le biais d'au moins un moyen d'entraînement de la vis creuse (10, 110, 210, 310),
b. un élément d'écrou (40; 140; 240; 340) reçu dans un espace de réception (14) de la vis creuse (10, 110, 210, 310) et comportant une surface fonctionnelle radialement intérieure, de sorte qu'une première extrémité de liaison (64) d'un boulon de liaison (60; 160; 260; 360) permet de réaliser une liaison par complémentarité de forme ou par adhérence, dans lequel le boulon de liaison (60; 160; 260; 360) présente un premier moyen d'entraînement (68, 168, 268, 368) adjacent à la première extrémité de liaison (64), et dans lequel
c. le boulon de liaison (60; 160; 260; 360) présente une deuxième extrémité de liaison (70) permettant de réaliser une liaison par complémentarité de forme ou par adhérence avec un deuxième composant (B), par engagement de la deuxième extrémité de liaison du boulon de liaison dans une ouverture du deuxième composant et fixation dans celle-ci.

2. Élément de liaison (1, 101, 201, 301) selon la revendication 1, dans lequel une première ouverture de la vis creuse (10, 110, 210, 310) présente un diamètre d'ouverture, lequel est supérieur à un diamètre de boulon du boulon de liaison (60; 160; 260; 360) faisant saillie dans la vis creuse (10, 110, 210, 310), de sorte que le boulon de liaison (60; 160; 260; 360) est déplaçable dans la première ouverture de la vis creuse (10, 110, 210, 310) latéralement par rapport à son axe longitudinal L pour la compensation de tolérances.

3. Élément de liaison (1, 101, 201, 301) selon la revendication 2, dans lequel la vis creuse (10, 110, 210, 310) présente un col radial (22) au niveau de la première ouverture (20), lequel fait saillie dans la première ouverture (20), auquel l'élément d'écrou (40; 140; 240; 340) et le boulon de liaison (60; 160; 260; 360) peuvent être fixés par une liaison commune, afin de verrouiller une position radiale du boulon de liaison (60; 160; 260; 360) à l'intérieur de la première ouverture (20).

4. Élément de liaison (1, 101, 201, 301) selon l'une des revendications précédentes, dans lequel le boulon de liaison (60; 160; 260; 360) présente une bride de liaison (62) faisant saillie radialement vers l'extérieur entre la première et la deuxième extrémité de liaison, laquelle facilite une liaison par adhérence avec la vis creuse (10, 110, 210, 310).

5. Élément de liaison (1, 101, 201, 301) selon la revendication 4, dans lequel la bride de liaison (62) présente des âmes tournées vers la vis creuse (10, 110, 210, 310), lesquelles facilitent une liaison par complémentarité de forme entre la vis creuse (10, 110, 210, 310) et le boulon de liaison (60; 160; 260; 360).

6. Élément de liaison (1, 101, 201, 301) selon la revendication 4 ou 5, dans lequel la bride de liaison (62) présente un élément d'étanchéité en forme de chapeau (90), lequel fait saillie en direction de la deuxième extrémité de liaison (70) pour assurer l'étanchéité d'une liaison avec un deuxième composant (B).

7. Élément de liaison (1, 101, 201, 301) selon l'une des revendications précédentes, dans lequel la surface fonctionnelle radialement intérieure de l'élément d'écrou (40; 140; 240; 340) et la première extrémité de liaison (70) du boulon de liaison (60; 160; 260; 360) forment une fermeture rapide, en particulier une fermeture rapide à quart de tour.

8. Élément de liaison (1, 101, 201, 301) selon l'une des revendications 1 à 6, dans lequel la première extrémité de liaison du boulon de liaison (60; 160; 260; 360) présente un filetage extérieur et l'élément d'écrou (40; 140; 240; 340) présente un filetage intérieur adapté à celui-ci pour la réalisation d'une liaison filetée.

9. Élément de liaison (1, 101, 201, 301) selon l'une des revendications précédentes, dans lequel la deuxième extrémité de liaison du boulon de liaison (60; 160; 260; 360) forme une fermeture rapide avec une ouverture de liaison dans un deuxième composant, en particulier une fermeture rapide à quart de tour ou une fermeture à baïonnette.

10. Élément de liaison (1, 101, 201, 301) selon l'une des revendications précédentes, dans lequel la vis creuse présente un premier et un deuxième moyen d'entraînement, lesquels sont disposés de façon adjacente aux extrémités axiales opposées, en particulier un moyen d'entraînement extérieur et un moyen d'entraînement intérieur.

11. Liaison composée d'un premier et d'un deuxième composant (A, B) espacés l'un de l'autre avec l'élément de liaison (1, 101, 201, 301) selon l'une des revendications précédentes.

12. Procédé de liaison d'un premier et d'un deuxième composant (A, B) à une distance l'un par rapport à l'autre avec l'élément de liaison (1, 101, 201, 301) selon l'une des revendications précédentes 1 à 10, présentant les étapes suivantes :
a. vissage de la vis creuse (10, 110, 210, 310) de l'élément de liaison (1, 101, 201, 301) dans une première ouverture de fixation (20) sur le premier composant (A),
b. fixation de la deuxième extrémité de liaison du boulon de liaison (60; 160; 260; 360) dans une deuxième ouverture de fixation du deuxième composant, dans lequel des tolérances radiales dans une orientation axiale de la vis creuse (10, 110, 210, 310) et du boulon de liaison (60; 160; 260; 360) sont compensées,
c. liaison de l'élément d'écrou (40; 140; 240; 340) et de la première extrémité de liaison du boulon de liaison (60; 160; 260; 360), de manière à fixer le boulon de liaison à la vis creuse (10, 110, 210, 310).

13. Procédé de liaison selon la revendication 12, comprenant l'étape supplémentaire suivante :
d. rotation de la vis creuse (10, 110, 210, 310) dans le premier composant pour régler une position axiale de l'élément de liaison.

14. Procédé de liaison selon la revendication 12 ou 13, comprenant l'étape supplémentaire suivante :
desserrage de l'élément d'écrou (40; 140; 240; 340) à l'intérieur de la vis creuse (10, 110, 210, 310),
modification d'une position radiale du boulon de liaison (60; 160; 260; 360) par rapport à la vis creuse (10, 110, 210, 310) et
ensuite, fixation de l'élément d'écrou (40; 140; 240; 340) au boulon de liaison (60; 160; 260; 360).
